(19)

Europäisches
Patentamt

European
Patent Office

Office européen
des brevets

(11) **EP 4 290 618 A1**

(12) **EUROPEAN PATENT APPLICATION**
published in accordance with Art. 153(4) EPC

(43) Date of publication:
**13.12.2023 Bulletin 2023/50**

(21) Application number: **22749566.0**

(22) Date of filing: **26.01.2022**

(51) International Patent Classification (IPC):
***H01M 4/587*** (2010.01)

(52) Cooperative Patent Classification (CPC):
**H01M 4/587; Y02E 60/10**

(86) International application number:
**PCT/JP2022/002824**

(87) International publication number:
**WO 2022/168692 (11.08.2022 Gazette 2022/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.02.2021 PCT/JP2021/003761**

(71) Applicant: Resonac Corporation
**Tokyo 105-8518 (JP)**

(72) Inventors:
• **ONUMA, Hiroo**
**Tokyo 100-6606 (JP)**
• **TSUCHIYA, Hideyuki**
**Tokyo 100-6606 (JP)**
• **SATO, Takeshi**
**Tokyo 100-6606 (JP)**
• **KUBOTA, Takashi**
**Tokyo 100-6606 (JP)**

(74) Representative: **Berggren Oy**
**P.O. Box 16**
**Eteläinen Rautatiekatu 10A**
**00101 Helsinki (FI)**

(54) **NEGATIVE ELECTRODE MATERIAL FOR LITHIUM ION SECONDARY BATTERIES, NEGATIVE ELECTRODE MATERIAL COMPOSITION FOR LITHIUM ION SECONDARY BATTERIES, NEGATIVE ELECTRODE FOR LITHIUM ION SECONDARY BATTERIES, AND LITHIUM ION SECONDARY BATTERY**

(57) A negative electrode material for a lithium-ion secondary battery comprising graphite particles satisfying x ≥2.0 when a compressive load required to consolidate to 1.7 g/cm$^3$ in autograph measurement is x (kN/cm$^2$), 5.0 ≤y ≤20.0 when, a particle size at which a cumulative volume from a small diameter side of a volume-based particle size distribution measured by a laser diffraction method reaches 50% is y, the above mentioned x and y satisfy the following Formula (1), and a degree of graphitization satisfies 90.0% or more:

$$11.3x - 0.66y + 1.4 \geq 14.5 \cdots (1).$$

EP 4 290 618 A1

**Description**

Technical Field

The present invention relates to a negative electrode material for a lithium-ion secondary battery, a negative electrode material composition for a lithium-ion secondary battery, a negative electrode for a lithium-ion secondary battery, and a lithium-ion secondary battery.

Background Art

Lithium-ion secondary batteries have been widely used in electronic devices such as laptop personal computers (PCs), mobile phones, smartphones, and tablet PCs by virtue of their properties such as small size, light weight, and high energy density. In the background of recent environmental issues such as global worming caused by $CO_2$ emissions, electric vehicles such as clean electric vehicles (EVs) that run only on batteries, hybrid electric vehicles (HEVs) that utilize gasoline engines and batteries in combination, and plug-in hybrid electric vehicles (PHEVs) have become widespread, and lithium-ion secondary batteries (in-vehicle lithium-ion secondary batteries) as batteries mounted on these vehicles has developed.

Input characteristics of lithium-ion secondary batteries are greatly influenced by the performance of negative electrode materials for the lithium-ion secondary batteries. As materials for negative electrode materials for lithium-ion secondary batteries, carbon materials are widely used. For example, as materials for obtaining a high-density negative electrode, carbon materials having a high degree of crystallinity, such as artificial graphite and spherical natural graphite obtained by spheroidizing natural vein graphite, have been proposed.

As for the artificial graphite, for example, Patent Document 1 discloses a negative electrode material for a lithium-ion secondary battery including composite particles, each of the composite particles including spherical graphite particles and a plurality of flat graphite particles that are gathered or bound together such that the flat graphite particles have non-parallel orientation planes. Further, Patent Document 2 discloses a negative electrode active material for a lithium-ion secondary battery including carbon powder particles, each particles having a form in which plate-shaped particles are oriented in the direction of the planes and are stacked to be assembled in a primarily stable structure, and having fine pores formed on the surface thereof.

Citation List

Patent Documents

[Patent Document 1] International Publication No. 2015/147012
[Patent Document 2] Japanese Patent Application Laid-Open (JP-A) No. 2005-302725

SUMMARY OF INVENTION

Technical Problem

Demand for negative electrode materials for lithium-ion secondary batteries has been increasing due to the rapid growth of the EV market. In particular, there is a strong need for increased discharge capacity and rapid charging in order to improve convenience, and high-rate charging is required for negative electrode active materials.

The problem with such high-rate charging is that a part of the lithium ions cannot be inserted between graphite layers due to the IR drop when a large current is applied, and lithium metal tends to deposit on the surface of the graphite particles. When lithium metal is deposited in a needle shape, it may break through the separator, causing an internal short circuit and leading to thermal runaway.

From the above points, it is desirable that a negative electrode material for a lithium-ion secondary battery can restrain the deposition of lithium metal and can produce a lithium-ion secondary battery with excellent lithium (Li) deposition resistance.

In view of the above circumstances, an object of one embodiment of the present disclosure is to provide a negative electrode material for a lithium-ion secondary battery capable of manufacturing a lithium-ion secondary battery with excellent discharging capacity, which can restrain the deposition of lithium metal, and with excellent Li deposition resistance, and a negative electrode material composition for a lithium-ion secondary battery, a negative electrode for a lithium-ion secondary battery, and a lithium-ion secondary battery which include the same.

An object of another embodiment of the present disclosure is to provide a negative electrode material for a lithium-ion secondary battery, which enable to restrain the deposition of lithium metal, and with excellent Li deposition resistance, and a negative electrode material composition for a lithium-ion secondary battery, a negative electrode for a lithium-ion secondary battery, and a lithium-ion secondary battery which include the same.

Solution to Problem

Means for solving the above problems include the following aspects.

<1> A negative electrode material for a lithium-ion secondary battery comprising graphite particles satisfying $x \geq 2.0$ when a compressive load required to consolidate to 1.7 $g/cm^3$ in autograph measurement is x ($kN/cm^2$), $5.0 \leq y \leq 20.0$ when, a particle size at which a cumulative volume from a small diameter side of a volume-based particle size distribution measured by a laser diffraction method reaches 50% is y, wherein the above mentioned x and y satisfy the following Formula (1), and a degree of graphitization satisfies 90.0% or more:

$$11.3x - 0.66y + 1.4 \geq 14.5 \cdots (1).$$

<2> A negative electrode material for a lithium-ion secondary battery comprising graphite particles satisfying, when the negative electrode material for a lithium-ion secondary battery is used to form a negative electrode material layer, a ratio L/T between a curved path length L ($\mu m$), which is a distance from one face to the other face in a thickness direction through a void inside the negative electrode material layer and a thickness T ($\mu m$) of the negative electrode material layer, of 1.7 or less.

<3> The negative electrode material for a lithium-ion secondary battery according to <1> or <2>, wherein a ratio $I_{002}/I_{110}$ between a peak intensity ($I_{002}$) of a 002 diffraction line and a peak intensity ($I_{110}$) of a 110 diffraction line, which are obtained when the negative electrode material for a lithium-ion secondary battery is used to form a negative electrode and the negative electrode pressed under 0.8 t/cm is subject to an X-ray diffraction measurement, is 350 or less.

<4> The negative electrode material for a lithium-ion secondary battery according to any one of <1> to <3>, wherein a face of the graphite particles is not coated with a low crystalline carbon.

<5> The negative electrode material for a lithium-ion secondary battery according to any one of <1> to <4>, wherein when a ratio $I_D/I_G$ between a peak intensity ($I_D$) in a range of 1300 $cm^{-1}$ to 1400 $cm^{-1}$ and a peak intensity ($I_G$) in a range of 1580 $cm^{-1}$ to 1620 $cm^{-1}$ is a R value, the R value of the graphite particles is from 0.10 to 0.40.

<6> The negative electrode material for a lithium-ion secondary battery according to any one of <1> to <5>, wherein a face of the graphite particles is coated with a low crystalline carbon,
wherein when a ratio $I_D/I_G$ between a peak intensity ($I_D$) in a range of 1300 $cm^{-1}$ to 1400 $cm^{-1}$ and a peak intensity ($I_G$) in a range of 1580 $cm^{-1}$ to 1620 $cm^{-1}$ is a R value, the R value of the graphite particles is from 0.20 to 0.60.

<7> The negative electrode material for a lithium-ion secondary battery according to any one of <1> to <6>, wherein a particle size of the graphite particles at which the cumulative volume from the small diameter side of the volume-based particle size distribution measured by a laser diffraction method reaches 10% is from 0.1 $\mu m$ to 7.0 $\mu m$.

<8> The negative electrode material for a lithium-ion secondary battery according to any one of <1> to <7>, wherein a 0 times tap density of the graphite particles is from 0.3 $g/cm^3$ to 0.6 $g/cm^3$.

<9> The negative electrode material for a lithium-ion secondary battery according to any one of <1> to <8>, wherein a 30 times tap density of the graphite particles is from 0.4 $g/cm^3$ to 0.7 $g/cm^3$.

<10> The negative electrode material for a lithium-ion secondary battery according to any one of <1> to <9>, wherein a 250 times tap density of the graphite particles is from 0.7 $g/cm^3$ to 1.1 $g/cm^3$.

<11> The negative electrode material for a lithium-ion secondary battery according to any one of <1> to <10>, wherein a specific surface area of the graphite particles measured by a nitrogen adsorption measurement at 77K is from 0.2 $m^2/g$ to 6.0 $m^2/g$.

<12> The negative electrode material for a lithium-ion secondary battery according to any one of <1> to <11>, wherein a particle size distribution D90/D10 of the graphite particles is from 3.0 to 7.0.

<13> The negative electrode material for a lithium-ion secondary battery according to any one of <1> to <12>, wherein the graphite particles comprises composite particles in which a plurality of graphite particles are gathered or bound together.

<14> A negative electrode material composition for a lithium-ion secondary battery, comprising: the negative electrode material for a lithium-ion secondary battery according to any one of <1> to <13>, a binder, and a solvent.

<15> A negative electrode for a lithium-ion secondary battery, comprising: a negative electrode material layer comprising the negative electrode material for a lithium-ion secondary battery according to any one of <1> to <13>, and a current collector.

< 16> A lithium-ion secondary battery, comprising: the negative electrode for a lithium-ion secondary battery according to <15>, a positive electrode; and an electrolytic solution.

Advantageous Effects of Invention

One embodiment of the present disclosure can provide a negative electrode material for a lithium-ion secondary battery capable of manufacturing a lithium-ion secondary battery with excellent discharging capacity, which can restrain the deposition of Lithium metal, and with excellent Li deposition resistance, and a negative electrode material composition for a lithium-ion secondary battery, a negative electrode for a lithium-ion secondary battery, and a lithium-ion secondary battery which include the same.

Another embodiment of the present disclosure can provide a negative electrode material for a lithium-ion secondary battery, which can restrain the deposition of Lithium metal, and with excellent Li deposition resistance, and a negative electrode material composition for a lithium-ion secondary battery, a negative electrode for a lithium-ion secondary battery, and a lithium-ion secondary battery which include the same.

Brief description of drawing

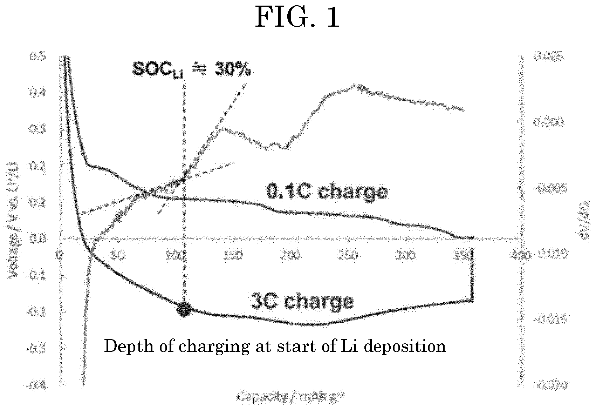

FIG. 1 is an example of graph used for an evaluation of Li deposition resistance.

DESCRIPTION OF EMBODIMENTS

Embodiments for carrying out the invention will be described below in detail. However, the invention is not limited to the following embodiments. In the following embodiments, components (including elemental steps, etc.) thereof are not essential unless otherwise specified. The same applies to numerical values and ranges, which do not limit the invention.

In the present disclosure, the term "step (process)" encompasses an independent step separated from other steps as well as a step that is not clearly separated from other steps, as long as a purpose of the step can be achieved. In the present disclosure, a numerical range specified using "(from) ... to ..." represents a range including the numerical values noted before and after "to" as a minimum value and a maximum value, respectively.

In the numerical ranges described in a stepwise manner in the present disclosure, the upper limit value or the lower limit value described in one numerical range may be replaced with the upper limit value or the lower limit value of another numerical range described in a stepwise manner. Further, in the numerical ranges described in the present disclosure, the upper limit value or the lower limit value of the numerical ranges may be replaced with the values shown in the Examples.

In the present disclosure, each component may include plural substances corresponding to the component. In the case in which plural substances corresponding to a component are present in a composition, the amount or content of the component in the composition means the total amount or content of the plural substances present in the composition unless otherwise specified.

In the present disclosure, each component may include plural kinds of particles corresponding to the component. In the case in which plural kinds of particles corresponding to a component are present in a composition, the particle size of the component means a value with respect to the mixture of the plural kinds of particles present in the composition, unless otherwise specified.

The term "layer" or "film" as used herein encompasses, when a region in which the layer or the film is present is observed, not only a case in which the layer or the film is formed over the entire observed region, but also a case in which the layer or the film is formed at only a part of the observed region.

The term "layered (stacked)" as used herein means disposing layers on one another, in which two or more layers may be bonded with each other, or may be attachable to/detachable from one another.

In the present disclosure, the particle size distribution of primary particles included in a negative electrode material or composite particles can be measured using a laser diffraction particle size distribution analyzer. The average particle size of particles means a particle size at which the cumulative volume from the small diameter side of a volume-based particle size distribution reaches 50% (D50). D99.9 means a particle size at which the cumulative volume from the small diameter side of the volume-based particle size distribution reaches 99.9%, D90 means a particle size at which the cumulative volume from the small diameter side of the volume-based particle size distribution reaches 90%, and D10 means a particle size at which the cumulative volume from the small diameter side of the volume-based particle size distribution reaches 10%.

<<Negative Electrode Material of Lithium-Ion Secondary Battery>>

Hereinafter, regarding a negative electrode material for lithium-ion secondary battery of the present disclosure, a negative electrode material for a lithium-ion secondary battery of the first embodiment and a negative electrode material for a lithium-ion secondary battery of the second embodiment will be described in order. However, the present invention is not limited to these embodiments.

[First Embodiment]

A negative electrode material for a lithium-ion secondary battery (hereinafter, also referred to as negative electrode material) according to the first embodiment of the present disclosure includes graphite particles satisfying x $\geq$2.0 when a compressive load required to consolidate to 1.7 g/cm$^3$ in autograph measurement is x (kN/cm$^2$), 5.0 $\leq$y $\leq$20.0 when, a particle size at which a cumulative volume from a small diameter side of a volume-based particle size distribution measured by a laser diffraction method reaches 50% is y, the above mentioned x and y satisfy the following Formula (1), and a degree of graphitization satisfies 90.0% or more:

$$11.3x-0.66y+1.4 \geq 14.5 \cdot\cdot\cdot(1).$$

It is possible to manufacture a lithium-ion secondary battery with excellent discharge capacity, which can restrain the deposition of lithium metal, and with excellent lithium (Li) deposition resistance by using the negative electrode material of the first embodiment. The reason for this is presumed, for example, as follows. When the degree of graphitization of the graphite particles is 90.0% or more, the discharge capacity tends to be excellent when producing a lithium-ion secondary battery.

In a lithium-ion secondary battery, during charging, lithium ions begin to be inserted from the graphite particles on the surface side of the negative electrode, and gradually shift to the insertion of lithium ions into the graphite particles located deep inside. The present inventors considered that the deposition of lithium metal during charging can be restrained by reducing the time difference between charging reactions on the surface side of the negative electrode and the deep part of the negative electrode, so that lithium metal deposition during charging tends to be reduced. The reason for this is as follows. Since lithium ions can diffuse deep into the current collector side in a short time, the amount of active material that can react with lithium ions increases, and the internal resistance decreases as the effective reaction area increases relative to the applied current. As a result, the IR drop can be reduced and the negative electrode potential can be maintained high, so it is considered that the time required to reach the lithium deposition start potential, the amount of electricity, or the like can be increased.

Herein, it is presumed that by reducing the particle size of the graphite particles, it is possible to shorten the distance that lithium ions move from the surface layer side of the negative electrode to the graphite particles in the deep part of the negative electrode.

By increasing the compressive load required to compact the graphite particles to a specific density, the graphite particles are less likely to crush when the negative electrode is formed using the negative electrode material that is graphite particles. As a result, the path of lithium ions is less likely to be blocked. It is presumed that this makes it possible to shorten the distance that lithium ions move from the surface layer side of the negative electrode to the graphite particles in the deep portion of the negative electrode.

As described above, by reducing the particle size of the graphite particles and increasing the compressive load of the graphite particles, it is possible to shorten the distance that lithium ions move from the surface layer side of the negative electrode to the graphite particles in the deep part of the negative electrode. As a result, it is considered that the time difference between charging reactions on the surface side of the negative electrode and the deep part of the negative electrode can be reduced. Furthermore, the present inventors have found that when the particle size of the graphite particles and the compressive load of the graphite particles satisfy the above formula (1), it is effective in restraining lithium metal deposition during charging, and the Li deposition resistance can be improved.

(Compressive Load)

The compressive load of the graphite particles, which is indicated as x in formula (1), is not particularly limited as long as it is 2.0 kN/cm$^2$ or more and a value capable of satisfying the above-described formula (1). For example, from the viewpoint of suitably restraining deformation of the graphite particles or the like by pressing when producing a negative electrode, the compressive load of the graphite particles is preferably 2.3 kN/cm$^2$ or more, more preferably 2.5 kN/cm$^2$ or more, still more preferably 2.8 kN/cm$^2$ or more, and particularly preferably 3.0 kN/cm$^2$ or more.

From the viewpoint of restraining deformation of a current collector, peeling of a current collector from the active material, or the like, the compressive load of the graphite particles may be 5.0 kN/cm$^2$ or less, may be 4.5 kN/cm$^2$ or less, may be 4.0 kN/cm$^2$ or less or may be 3.5 kN/cm$^2$ or less.

In the present disclosure, the compressive load of the graphite particles can be determined as shown below. A mold is filled with graphite particles of a predetermined mass (for example, 3.0 g) and compressed at a constant speed (for example, 10 mm/min), and the pressure (kN/cm$^2$) when the density of the compressed graphite particles is reached to 1.7g/cm$^3$ is regarded as the compressive load of the graphite particles.

For the above measurements, for example, a mold with a diameter of 15 mm is used, and compression is performed using an autograph (manufactured by Shimadzu Corporation, for example). The density of the graphite particles is calculated from the volume of the graphite particles calculated from the bottom area of the mold (for example, 1.767 cm$^2$) and the distance from the bottom surface of the mold to the pressing surface of the graphite particles, and the mass of the graphite particles.

It means that the larger the compressive load, the less likely deformation, breakage, or the like of the graphite particles will occur due to pressurization.

(Average Particle Size)

The particle size (hereinafter, also referred to as "average particle size") of the graphite particles at which the cumulative volume from the small diameter side of the volume-based particle size distribution measured by laser diffraction method reaches 50% is from 5.0 $\mu$m to 20.0 $\mu$m. The average particle size of the graphite particles corresponds to y in formula (a).

The average particle size of the graphite particles is preferably 17.0 $\mu$m or less, is more preferably 14.5 $\mu$m or less, and still more preferably 11.0 $\mu$m or less, from the viewpoint of further improving the Li deposition resistance.

The average particle size of the graphite particles may be 6.0 $\mu$m or more, or may be 7.0 $\mu$m or more.

The average particle size of the graphite particles can be measured using a laser diffraction particle size distribution analyzer (for example, SALD3100, manufactured by Shimadzu Corporation).

Examples of measurement method of the average particle size of the graphite particles in a state included in a negative electrode include: a method in which a sample electrode is fabricated, embedded in an epoxy resin, mirror-polished, and observed in its cross-section with a scanning electron microscope (for example, VE-7800 manufactured by Keyence Corporation); and a method in which a cross-section of an electrode prepared using an ion milling apparatus (for example, E-3500, manufactured by Hitachi High-Tech Corporation) is observed using a scanning electron microscope (for example, VE-7800 manufactured by Keyence Corporation). The average particle size in this case is a median value of the particle sizes of 100 randomly selected particles.

The negative electrode material of the first embodiment preferably satisfies the following formula (2), more preferably satisfies the following formula (3), and still more preferably satisfies the following formula (4), from the viewpoint of suitably reducing the deposition of lithium metal and being more excellent in the Li deposition resistance.

$$11.3x - 0.66y + 1.4 \geq 20 \cdots (2)$$

$$11.3x - 0.66y + 1.4 \geq 25 \cdots (3)$$

$$11.3x - 0.66y + 1.4 \geq 30 \cdots (4)$$

(D10)

D10 of the graphite particles is preferably from 0.1 $\mu$m to 7.0 $\mu$m, more preferably from 0.1 $\mu$m to 6.0 $\mu$m, still more preferably from 1.0 $\mu$m to 6.0 $\mu$m and particularly preferably from 2.5 $\mu$m to 5.5 $\mu$m.

D10 of the graphite particles can be measured using a laser diffraction particle size distribution analyzer (for example, SALD3100, manufactured by Shimadzu Corporation).

(Particle Size Distribution D90/D10)

The particle size distribution D90/D10 of the graphite particles is not particularly limited and the lower limit may be 3.0 or more, may be 3.5 or more, may be 4.0 or more.

The upper limit of the particle size distribution D90/D10 of the graphite particles may be 7.0 or less, may be 6.5 or less, or may be 6.2 or less.

When the particle size distribution D90/D10 of the graphite particles is 7.0 or less, the distance that the lithium ions move from the surface layer side of the negative electrode to the graphite particles in the deep part of the negative electrode, can be shortened. As a result, it is possible to reduce the time difference between charging reactions on the surface side of the negative electrode and the deep part of the negative electrode, so that lithium metal deposition during charging tends to be reduced.

The particle size distribution D90/D10 can be measured using a laser diffraction particle size distribution analyzer (for example, SALD3100, manufactured by Shimadzu Corporation).

Examples of measurement method of the particle size distribution D90/D10 of the graphite particles in a state included in a negative electrode include: a method in which a sample electrode is fabricated, embedded in an epoxy resin, mirror-polished, and observed in its cross-section with a scanning electron microscope (for example, VE-7800 manufactured by Keyence Corporation); and a method in which a cross-section of an electrode prepared using an ion milling apparatus (for example, E-3500, manufactured by Hitachi High-Tech Corporation) is observed using a scanning electron microscope (for example, VE-7800 manufactured by Keyence Corporation). The particle size distribution D90/D10 in this case can be obtained by the following method.

(1) The area Sn of a projected particle image (n is a particle unique number assigned to the selected particle) is obtained using a binarization method or the like.
(2) The equivalent circle diameter $Ln = \sqrt{Sn / \pi}$ is obtained from the area Sn, assuming that the particle is a true sphere with an ideal shape.
(3) The sphere volume $Vn = (4/3) \pi (Ln)^3$ is obtained based on the equivalent circle diameter Ln.
(4) The processes (1) to (3) are repeated for selected 100 particles.
(5) In the distribution curve in which the vertical axis represents the cumulative value % of volume for 100 particles and the horizontal axis represents the particle size, the particle size at a point at which the curve corresponds to 10% in the horizontal axis is defined as 10% diameter (D10), and the particle size at a point at which the curve corresponds to 90% in the horizontal axis is defined as 90% diameter (D90), whereby D90/D10 can be obtained.

(Standard Deviation of Particle Size Distribution)

The standard deviation of the particle size distribution of the graphite particles may be from 0.18 to 0.40 or may be from 0.25 to 0.35.

The standard deviation of the particle size distribution can be measured using a laser diffraction particle size distribution analyzer (for example, SALD3100, manufactured by Shimadzu Corporation) based on a frequency distribution graph in which the horizontal axis indicates the log scale of the particle size and the vertical axis indicates the amount of particles (%).

(Degree of Graphitization)

The degree of graphitization in the graphite particles is 90.0% or more, and from the viewpoint of discharge capacity when producing a lithium-ion secondary battery, it is preferably 90.5% or more, more preferably 91.0% or more, and still more preferably 92.0% or more.

The upper limit of the degree of graphitization in the graphite particles is not particularly limited and may be 100% or less, and when the average particle size of graphite particle is high (for example, when it is higher than 12.0 $\mu$m), from the viewpoint that the hardness of the graphite particles is sufficient high and deformation, destruction or the like of the particles tends to be less likely to occur, it may be 97.0% or less.

The degree of graphitization in graphite particles can be measured as follows, for example.

10 parts by mass or 20 parts by mass of silicon powder (for example, National Institute of Standards and Technology NIST, SRM640f) are mixed with the graphite particles, and the obtained mixture is placed in a sample holder for X-ray diffraction measurement. Using an X-ray diffractometer (for example, an X-ray diffractometer manufactured by Rigaku Corporation, X-RAY DIFFRACTIOMETER MultiFlex), the diffraction angle corresponding to the (002) plane of graphite and the diffraction angle corresponding to the (111) plane of silicon are measured by X-ray diffraction measurement using a CuK$\alpha$ ray ($2\theta = 25°$ to $29°$).

The correct diffraction angle of graphite is obtained by correcting the observed diffraction angles of silicon and graphite using the theoretical diffraction angle of Si ($2\theta = 28.442°$).

The interplanar spacing (Å) of the d(002) plane of the negative electrode material is calculated using Bragg's equation ($2d\sin\theta = n\lambda$), and the degree of graphitization is calculated by the following equation.

$$\text{Degree of graphitization} = [(3.44\text{-interplanar spacing})/(0.086)] \times 100$$

($I_{002}/I_{110}$)

A negative electrode is formed using the negative electrode material of the present disclosure, and from the viewpoint of input characteristics in a lithium-ion secondary battery, $I_{002}/I_{110}$, which is the ratio of the peak intensity ($I_{002}$) of the 002 diffraction line and the peak intensity ($I_{110}$) of the 110 diffraction line which are obtained when the negative electrode pressed at 0.8 t/cm is subjected to X-ray diffraction measurement using CuKα rays, is preferably 350 or less, more preferably 330 or less, and still more preferably 300 or less.

The lower limit of $I_{002}/I_{110}$ is not particularly limited and may be 200 or more.

$I_{002}/I_{110}$ can be determined by the method described in Examples. When measuring $I_{002}/I_{110}$, the components other than the graphite particles and their ratios, which are the conditions for manufacturing the negative electrode, and the manufacturing conditions for the negative electrode are the same as the manufacturing conditions described in the method of measuring electrode orientation in Examples.

(0 Times Tap Density)

The 0 times tap density of the graphite particles is preferably 0.3 g/cm$^3$ to 0.6 g/cm$^3$, and more preferably 0.35 g/cm$^3$ to 0.55 g/cm$^3$, from the viewpoint of easily improving the input and output characteristics and energy density in a lithium-ion secondary battery, and from the viewpoint of easily improving the compressive load.

100 cm$^3$ of sample powder of the graphite particles is put into a graduated flat-bottomed test tube (KRS-406, manufactured by Kuramochi Scientific Instruments Co., Ltd.) with capacity of 150cm$^3$, and the 0 times tap density of the graphite particles is the value of the density determined from the mass and volume of the sample powder before dropping the graduated flat-bottomed test tube which is capped.

(30 Times Tap Density)

The 30 times tap density of the graphite particles is preferably 0.4 g/cm$^3$ to 0.7 g/cm$^3$, and more preferably 0.45 g/cm$^3$ to 0.65 g/cm$^3$, from the viewpoint of easily improving the input and output characteristics and energy density in a lithium-ion secondary battery, and from the viewpoint of easily improving the compressive load.

The 30 times tap density of the graphite particles can be determined, for example, as follows.

100 cm$^3$ of sample powder of the graphite particles is put into a graduated flat-bottomed test tube (KRS-406, manufactured by Kuramochi Scientific Instruments Co., Ltd.) with capacity of 150cm$^3$, and the graduated flat-bottomed test tube is capped. Then, the value of the density, which is determined from the mass and volume of the sample powder after dropping the graduated flat-bottomed test tube 30 times from a height of 5 cm, is defined as the 30 times tap density.

(250 Times Tap Density)

The 250 times tap density of the graphite particles is preferably 0.7 g/cm$^3$ to 1.1 g/cm$^3$, and more preferably 0.75 g/cm$^3$ to 1.0 g/cm$^3$, from the viewpoint of easily improving the input and output characteristics and energy density in a lithium-ion secondary battery, and from the viewpoint of easily improving the compressive load.

The 250 times tap density of the graphite particles can be determined, for example, as follows.

100 cm$^3$ of sample powder of the graphite particles is put into a graduated flat-bottomed test tube (KRS-406, manufactured by Kuramochi Scientific Instruments Co., Ltd.) with capacity of 150cm$^3$, and the graduated flat-bottomed test tube is capped. Then, the value of the density, which is determined from the mass and volume of the sample powder after dropping the graduated flat-bottomed test tube 250 times from a height of 5 cm, is defined as the 250 times tap density.

(Specific Surface Area)

The specific surface area determined by nitrogen adsorption measurement at 77K of the graphite particles is not particularly limited. For example, from the viewpoint of improving rapid charge and discharge characteristics and from the viewpoint of further restraining the decomposition of an electrolytic solution, the specific surface area of the graphite particles is preferably from 0.2 m$^2$/g to 6.0 m$^2$/g, more preferably from 1.5 m$^2$/g to 5.0 m$^2$/g, and still more preferably from 2.0 m$^2$/g to 4.0 m$^2$/g.

The specific surface area determined by nitrogen adsorption measurement at 77K can be determined by the BET method based on the adsorption isotherm obtained by the nitrogen adsorption measurement at 77K. Specifically, the specific surface area can be determined by the method described in the Examples.

The specific surface area of the graphite particles can be adjusted by particle size distribution, particle structure or the like.

The specific surface area of the graphite particles may be adjusted by coating of the graphite particles with low crystalline carbon or the like. When it is desired to make the particle size finer, the specific surface area is greatly increased due to the irregularities caused by the grinding. By coating, the irregularities can be filled with a coating material to make them smooth and thus the specific surface area can be adjusted.

The graphite particles may or may not be subjected to surface coating treatment with low crystalline carbon.

In a case in which the surface of the graphite particles is coated with low crystalline carbon, the charge characteristics at low temperatures tend to improve when a lithium-ion secondary battery is produced.

On the other hand, in a case in which the graphite particles are not subjected to surface coating treatment with low crystalline carbon, a possibility of deterioration of storage characteristics tends to be restrained, the deterioration being due to the occurrence of cracks and peelings of the graphite particles during the pressing in the process of fabricating an electrode, which increases the decomposition activity of the electrolytic solution. Further, this has an advantage in expanding flexibility in manufacturing conditions. In addition, when low crystalline carbon does not disposed on the surface in the negative electrode material of the present disclosure, it is possible to restrain lithium metal deposition during charging.

When the R value is $I_D/I_G$, which is the ratio of the peak intensity ($I_D$) in the range of 1300 cm$^{-1}$ to 1400 cm$^{-1}$ and the peak intensity ($I_G$) in the range of 1580 cm$^{-1}$ to 1620 cm$^{-1}$ measured by Raman spectroscopy, the R value of graphite particles may be from 0.10 to 0.40, or may be from 0.10 to 0.35. In particular, it is preferable that the surface is not treated with low crystalline carbon and that the R value is from 0.10 to 0.40.

In the present disclosure, The R value can be measured by the method described in Examples.

The peak intensity ($I_D$) in the range of 1300 cm$^{-1}$ to 1400 cm$^{-1}$ corresponds to a peak identified as corresponding to the amorphous carbon structure, and for example, the peak appears around 1360 cm$^{-1}$.

The peak intensity ($I_G$) in the range of 1580 cm$^{-1}$ to 1620 cm$^{-1}$ corresponds to a peak identified as corresponding to the graphite crystal structure, and for example, the peak appears around 1580 cm$^{-1}$.

When the surface of the graphite particle is treated with low crystalline carbon, the above-described R value may be from 0.20 to 0.60, may be from 0.20 to 0.40.

(Springback Rate)

The springback rate of the graphite particles is not particularly limited. For example, from the viewpoint of further restraining breakage of graphite particles due to pressing when producing a negative electrode, the springback rate of graphite particles may be 15% or more, or may be 20% or more.

From the viewpoint of ease of densification by pressing when producing negative electrode, the springback rate of the graphite particles may be 40% or less, or may be 35% or less.

In the present disclosure, the springback rate of graphite particles is the degree to which the density decreases when the pressure is released after the graphite particles are compressed to a standard density. The larger the springback rate, the easier it is for graphite particles deformed by compression to return to their original state.

Specifically, a mold is filled with graphite particles of a predetermined mass (for example, 3.0 g), and the graphite particles are compressed at a constant speed (for example, 10 mm/min) until the density of the graphite particles reaches the standard density (for example, 1.7 g/cm$^3$). After that, the pressure is released, and when the press surface stops moving due to elasticity, the density after releasing the pressure (g/cm$^3$) is measured. From the obtained values, the springback rate is calculated by the following formula.

$$\text{Springback rate} = \{(\text{Standard density} - \text{Density after pressure release})/\text{Standard density}\} \times 100$$

For the above measurements, for example, a mold with a diameter of 15 mm is used, and compression is performed using an autograph (manufactured by Shimadzu Corporation, for example). The density of graphite particles is calculated from the volume of the graphite particles calculated from the bottom area of the mold (for example, 1.767 cm$^2$) and the distance from the bottom surface of the mold to the pressing surface of the graphite particles, and the mass of the graphite particles.

The compressive load and springback rate of the graphite particles can be adjusted by changing the physical properties, composition, or the like of the raw material for graphite particles (for example, needle coke), or by changing the graphitization conditions, or the like.

In the present disclosure, a carbon material having an average interplanar spacing ($d_{002}$) as determined by an X-ray diffraction method of less than 0.340 nm is regarded as graphite.

In the present disclosure, as will be described later, particles in which low crystalline carbon is disposed on at least a part of the surface of the graphite particles are also regarded as "graphite particles".

The theoretical value of the average interplanar spacing ($d_{002}$) of graphite crystals is 0.3354 nm, and the closer to this value, the more advanced the graphitization.

From the viewpoint of the initial charge and discharge efficiency and energy density of a lithium-ion secondary battery, the average interplanar spacing ($d_{002}$) is preferably 0.33600 nm or less, more preferably 0.33596 nm or less, and still more preferably 0.33592 nm or less.

From the above viewpoint, the average interplanar spacing ($d_{002}$) of graphite particles is preferably from 0.3354 nm to 0.33600 nm, more preferably from 0.3354 nm to 0.33596 nm, and still more preferably from 0.3354 nm to 0.33592 nm.

The average interplanar spacing ($d_{002}$) can be calculated using Bragg's equation based on the diffraction peak corresponding to the 002 plane of carbon, which appears around the diffraction angle $2\theta$ of 24° to 27° in a diffraction profile obtained by irradiating the test sample with an X-ray (CuK$\alpha$ ray) and carrying out the measurement on the diffraction lines with a goniometer. The measurement of the average interplanar spacing ($d_{002}$) can be performed under the following conditions.

Radiation source: CuK$\alpha$ ray (wavelength = 0.15418 nm)
Output: 40 kV, 20 mA
Sampling width: 0.010°
Scanning range: 10° to 35°
Scanning speed: 0.5°/ min

$$\text{Bragg's equation}: 2d\sin\theta = n\lambda$$

Here, d represents the length of a cycle; $\theta$ represents the diffraction angle; n represents the order of reflection; and $\lambda$ represents the wavelength of the X-ray.

<<Particles Structure of Graphite Particles>>

The graphite particles include a state (composite particles) in which a plurality of graphite particles (preferably, plurality of flat graphite particles) are gathered or bound together, or include composite particles (hereinafter, also referred to as specific composite particles) having a structure in which a plurality of flat graphite particles are stacked.

It is considered that the specific composite particles can reduce the contact area with an electrolytic solution inside the particles, compared to, for example, composite particles having a structure in which the main surfaces of a plurality of flat graphite particles are oriented in random directions, and decomposition of the electrolytic solution can be effectively restrained. Further, it is considered that deformation or breakage of the particles is unlikely to occur even if pressure is applied in the production of a negative electrode, and paths of the electrolytic solution between the particles are likely to be secured. Further, the electrolytic solution located inside the composite particles having a structure in which the main surfaces of the flat graphite particles are oriented in random directions has a complicated migration path and slows down. For this reason, it is considered that even an active material having a larger number of particle interfaces cannot exhibit high input and output performance due to diffusion hindrance. In particular, this tendency is conspicuous under input and output conditions where the C rate is high.

Flat graphite particles, which is included in the specific composite particles, refer to non-spherical graphite particles having anisotropy in shape. Examples of the flat graphite particles include vein, flake, and partially vein graphite particles.

Composite particles mean particles in which primary particles are gathered or bound together. Therefore, each of the specific composite particles has a structure in which a plurality of flat graphite particles are stacked with their main planes facing each other, thereby being gathered or bound together. Accordingly, a plurality of flat graphite particles are stacked almost in parallel to form composite particles. Whether or not the flat graphite particles are stacked or not can be confirmed by microscopic observation.

The state in which a plurality of flat graphite particles are gathered or bound together refers to a state in which two or more flat graphite particles are gathered or bound together. Being bound means that particles are chemically bound to each other either directly or via a carbon substance. Being gathered means that, while the particles are not chemically bound to each other, the particles maintain their shape as an assembled body owing to their shapes or the like.

The flat graphite particles may be gathered or bound together via a carbon substance. Examples of the carbon substance include graphite that results from graphitization of a binder such as tar, pitch, PVA (polyvinyl alcohol). or CMC (carboxymethyl cellulose). From the viewpoint of mechanical strength, it is preferable that two or more flat graphite particles are bonded togerther via a carbon substance. Whether or not the flat graphite particles are gathered or bound together can be confirmed by, for example, observation by a scanning electron microscope.

In order to reduce the ratio of composite particles having a structure in which the main surfaces of a plurality of flat graphite particles are oriented in random directions, it is preferably that the amount used of binder is as little as possible. Composite particles do not occur in the absence of a binder. On the other hand, when there is an excessive amount of binder, more primary particles are formed around the binder mass, that is, aggregate intermediates in which a plurality of primary particles are coordinated are generated, and the primary particles coordinated to the intermediates are likely to face in a non-parallel state.

A dispersant may be used in order to reduce lumps due to uneven distribution of the binder such as tar or pitch. By using a dispersant, the binder tends to be uniformly dispersed, and lumps of the binder tend to be reduced. Thereby, it is considered that the effect of reducing the proportion of composite particles having a structure in which the main surfaces of a plurality of flat graphite particles are oriented in random directions, will be obtained. In addition, the function of the binder is enhanced, the block moldability is improved, and the blending ratio of the binder can be reduced. Examples of the dispersants include dispersants that can be used in a step (b) described below.

From the viewpoint of reducing the amount used of the binder such as pitch, an aromatic compound may be used together with the binder. Examples of the aromatic compounds include aromatic compounds that can be used in a step (a) described below.

The flat graphite particles and the raw material thereof are not particularly limited, and examples thereof include artificial graphite, natural vein graphite, natural flake graphite, coke and resin. In particular, artificial graphite obtained by graphitizing coke is preferable from the viewpoint of low deformability and a low specific surface area. When natural graphite is used as a part of the raw material, it is likely to be softened, so it is preferable to adjust the blending amount while observing the compressive load.

When the graphite particles includes the specific composite particles, all of the graphite particles may be the specific composite particles or a part of the graphite particles may be graphite particles other than the specific composite particles.

[Second Embodiment]

A negative electrode material for a lithium-ion secondary battery according to the second embodiment of the present disclosure, when forming a negative electrode layer using the negative electrode material of lithium-ion secondary battery, includes a graphite particle satisfying a ratio L/T between a curved path length L ($\mu$m), which is a distance from one face to the other face in a thickness direction through a void inside the negative electrode material layer and a thickness T ($\mu$m) of the negative electrode material layer, of 1.7 or less.

In a lithium-ion secondary battery of the second embodiment, since L/T is 1.7 or less, it is possible to shorten the distance that lithium ions move from the surface layer side of the negative electrode to the graphite particles in the deep part of the negative electrode. As a result, it is assumed that the time difference between charging reactions on the surface side of the negative electrode and the deep part of the negative electrode can be reduced, and it is possible to manufacture a lithium-ion secondary battery that is excellent in the lithium (Li) deposition resistance like the negative electrode material of the first embodiment.

L/T can be measured as follows.

Using a microfocus X-ray CT system SMX-160CTS (manufactured by Shimadzu Corporation), X-ray CT measurements were performed under the conditions of a tube voltage of 48 kV, an SID axis of 350 mm, an SOD axis of 3 mm, the number of multi-accumulated scans twice, and a slice pitch of 0.001065 mm. The electrodes were cut into strips of 2 mm $\times$ 15 mm for measurement. Using the obtained CT image, 3D analysis was performed with EXFact VR and ExFact Analysis for Porous Particles (both manufactured by Nippon Visual Science Co., Ltd.), passing through the voids inside the negative electrode material layer, all the minimum values of the curved paths reaching the electrodeposited copper foil surface side from the voids on the surface of the negative electrode material layer in the thickness direction were obtained, and the arithmetic average value was taken as the curved path length L ($\mu$m). Then, the curved path ratio was obtained by dividing the curved path length L by the thickness T ($\mu$m) of the negative electrode material layer. In addition, when there are a plurality of curved paths extending from one void on the electrodeposited copper foil surface to the surface side of the negative electrode material layer in the thickness direction, a value that minimizes the number of curved paths among them was selected. When measuring L/T, the components other than the graphite particles, the ratio thereof, and the manufacturing conditions of the negative electrode material layer, which are the conditions for manufacturing the negative electrode material layer, are the same as the manufacturing conditions described in the method for measuring electrode orientation in Examples, except that no press treatment is performed.

In the negative electrode material for a lithium-ion secondary battery of the second embodiment, L/T is preferably 1.65 or less, and more preferably 1.6 or less.

The lower limit of L/T is not particularly limited as long as it is 1.0 or more, and from the viewpoint of ease of manufacture, it may be 1.5 or more.

The configuration described in the item of the negative electrode material of the first embodiment and the configuration described in the item of the negative electrode material for a lithium-ion secondary battery of the second embodiment may be combined as appropriate.

<<Method of Manufacturing Negative Electrode Material for Lithium-Ion Secondary Battery>>

A method of manufacturing a negative electrode material for a lithium-ion secondary battery, which is one of a method of manufacturing the negative electrode material for a lithium-ion secondary battery of the present disclosure, includes a step of graphitizing coke. More specifically, from the viewpoint of improving handling properties in graphitization treatment and the like, improving cycle characteristics of a lithium-ion secondary battery or the like, the method of manufacturing the negative electrode material for a lithium-ion secondary battery of the present disclosure preferably includes the following steps (a) to (d).

(a) a step of obtaining a mixture containing a graphitizable aggregate (coke), and a graphitizable binder;
(b) a step of obtaining a molded product with a density of 1.3 $g/cm^3$ or less by molding the mixture;
(c) a step of obtaining a graphitized product by graphitizing the molded product; and
(d) a step of obtaining a ground product by grinding the graphitized product.

Each step in the above method may be performed continuously or not continuously. Each step of the above method may be performed at the same place or at a different place.

The type of coke used in the manufacturing method is not particularly limited, and examples thereof include petroleum or coal-based coke such as fluid coke, needle coke, mosaic coke, and semi-needle coke having intermediate properties between needle coke and mosaic coke.

A method of obtaining coke particles is not particularly limited, and can be carried out by a known method. The particle size of the coke particles is not particularly limited, and can be selected in consideration of the desired particle size, particle structure or the like of the graphite particles. In order to obtain particles with a lower specific surface area, it is preferable to grind in the state of raw coke. Such particles have few voids, cracks or the like due to cleavage, and the compressive load of the graphite particles tends to be high.

In the manufacturing method of the present disclosure, after obtaining a mixture containing a graphitizable aggregate and a graphitizable binder, the mixture is molded to obtain a molded product with a density of 1.3 $g/cm^3$ or less. In the manufacturing method of the present disclosure, a mixture containing an aromatic compound may be used as the mixture for forming the molded product. As a result, the appearance of the molded product is improved, and the strength of the molded product is also improved, so that the handleability in the subsequent graphitization treatment or the like is also improved.

The reason why the appearance of the molded product is improved and the strength of the molded product is improved by using a mixture containing an aromatic compound for forming the molded product is presumed as follows.

(1) By adding liquid of an aromatic compound to a mixture containing a graphitizable aggregate, the surface of the graphitizable aggregate becomes slippery during molding of the mixture, and the mixture is arranged and voids are reduced. (2) A graphitizable binder is dissolved in the mixture and the binder is dispersed with high uniformity. It is considered that the above (1) and (2) improve the appearance of the molded product and also improve the strength of the molded product.

Furthermore, in the manufacturing method of the present disclosure, there is a tendency that after obtaining the molded product with a relatively low density, the molded product is graphitized, and then the graphitized product is ground to produce a lithium-ion secondary battery with excellent cycle characteristics. This reason is presumed as follows. In the manufacturing method of the present disclosure, the graphitized product can be ground more easily than when grinding the graphitized product obtained by using a molded product with a relatively high density, and as a result, a ground product with a small specific surface area can be obtained. By using a negative electrode material containing a ground product having a small specific surface area for manufacturing a lithium-ion secondary battery, the contact area between the negative electrode material and an electrolytic solution can be reduced. Thereby, the decomposition reaction of the electrolytic solution is reduced, and the life of the battery can be lengthened. As a result, the cycle characteristics of the lithium-ion secondary battery are excellent.

In the step (a), the mixture containing the graphitizable aggregate, the graphitizable binder and the aromatic compound as needed is obtained. The mixing is preferably performed at a temperature at which the graphitizable binder softens. Specifically, in a case in which the graphitizable binder is pitch, tar or the like, the temperature may be from 50°C to 300°C, and in a case in which the graphitizable binder is a thermosetting resin, the temperature may be from 20°C to 100°C.

A mixing method is not particularly limited. For example, a method of mixing using a planetary mixer, a kiln mixer, a huddle stirrer or the like is preferred. A kneader or the like that involves kneading may also be used.

When the graphitizable aggregate is in the form of particles, for example, the average particle size of the graphitizable aggregate is preferably from 5 µm to 40 µm, more preferably from 10 µm to 30 µm, and still more preferably from 10 µm to 25 µm.

For example, the standard deviation of the particle size distribution of the graphitizable aggregate is preferably 0.35 or less, more preferably 0.20 or less, and still more preferably 0.18 or less and particularly preferably 0.16 or less. When the above-mentioned standard deviation of the particle size distribution of the aggregate is 0.35 or less, variation in the particle size of the aggregate is reduced, and variation in the particle size of the obtained ground product is also reduced. By using the negative electrode material, which includes the ground product with small variation in the particle size, in the production of a lithium-ion secondary battery, the resistance distribution in the negative electrode can be made uniform. As a result, the quick charging performance of the lithium-ion secondary battery tends to improve. Further, by reducing the variation in the particle size of the aggregate, the function as a binder can be suitably secured, even if a content rate or a content of the graphitizable binder is reduced. The standard deviation of the particle size distribution is, for example, a value (volume basis) measured by the laser diffraction method.

The lower limit of the standard deviation of the particle size distribution of the graphitizable aggregate is not particularly limited, and for example, may be 0.05 or more, or may be 0.10 or more.

Examples of methods of adjusting the average particle size of the graphitizable aggregate and the standard deviation of the particle size distribution of the graphitizable aggregate to the above-mentioned ranges include sieve classification, wind power classification, wet classification and the like.

The graphitizable binder is not particularly limited as long as it is graphitized by graphitization treatment. Specifically, examples thereof include coal-based, petroleum-based, or artificial pitch and tar, starch, PVA, CMC, thermoplastic resins, thermosetting resins and the like.

The graphitizable aggregate and the graphitizable binder contained in the mixture may be only one component or two or more components, respectively.

When starch is used as a binder, compared to the case in which coal tar pitch is used, it tends to form a hard carbide and improve the compressive load of the graphite particles. Therefore, based on the formula (1), the input characteristics of a lithium-ion secondary battery, for example, Li deposition resistance, tend to improve. When starch is used, the moldability of the mixture tends to be improved, and thus it is possible to use a small amount of binder. As a result, the coke ratio in the mixture tends to increase, and the discharge capacity of a lithium-ion secondary battery tends to improve.

The content of each material in the mixture is not particularly limited. For example, the content of the graphitizable binder may be from 10 parts by mass to 30 parts by mass, may be from 12 parts by mass to 25 parts by mass, or may be from 14 parts by mass to 20 parts by mass, with respect to 100 parts by mass of the graphitizable aggregate. When the above binder is added to a solvent or dispersion medium and used as a solution or dispersion, parts by mass of the solvent or dispersion medium are excluded. When the content of the binder is 10 parts by mass or more, it tends to function favorably as a binder for graphitizable aggregates. When the content of the binder is 30 parts by mass or less, the amount of fixed carbon in the mixture is sufficiently ensured, and the yield tends to be excellent.

The graphitizable aggregate and the graphitizable binder contained in the mixture may be only one component or two or more components, respectively.

The aromatic compound is not particularly limited as long as it is a compound having an aromatic ring. The aromatic compound may be a compound having an aromatic ring and a molecular weight of 500 or less or may be a compound having an aromatic ring and a molecular weight of 300 or less.

Examples of the aromatic compound include naphthalene, methylnaphthalene such as 1-methylnaphthalene, 2-methylnaphthalene or the like, acenaphthene, biphenyl, fluorene, benzopyrene, benzanthracene, dibenzanthracene, diphenylene oxide, quinoline, and isoquinoline.

The aromatic compound contained in the mixture may be only one component or two or more components.

Among them, the aromatic compound is preferably methylnaphthalene or naphthalene from the viewpoint of moldability when molding the molded product.

When the mixture contains the aromatic compound, the content rate of the aromatic compound in the mixture is preferably from 1 % by mass to 20 % by mass, more preferably from 2 % by mass to 18 % by mass, and still more preferably preferably from 3 % by mass to 15 % by mass with respect to a total of 100 % by mass of the aggregate and the binder.

The mixture may contain other component(s) other than the graphitizable aggregate, the graphitizable binder, or the aromatic compound. Examples of other component(s) include graphite, a dispersant, and a graphitization catalyst.

The mixture may contain the graphite. Examples of the graphite include natural graphite and artificial graphite. The graphite is preferably in the form of particles. The mixture may contain only one type of graphite, or may contain two or more types of graphite.

The mixture preferably contains the dispersant from the viewpoint of easily dispersing the components in the mixture in the step (b) described below. When the mixture contains the dispersant, the variation in the particle size of the ground product obtained by grinding the graphitized product can be reduced, and the ground product whose particle size is made uniform can be easily obtained. As a result, the quick charging performance of the lithium-ion secondary battery tends to improve.

Further, the inclusion of the dispersant in the mixture leads to a reduction in the amount of the graphitizable binder, and can be expected to improve battery characteristics such as the initial charge and discharge efficiency of the negative electrode material.

The type of the dispersant is not particularly limited. Specific examples thereof include hydrocarbons such as liquid paraffin, paraffin wax, and polyethylene wax; fatty acids such as stearic acid, oleic acid, erucic acid, and 12-hydroxystearic acid; fatty acid metal salts such as zinc stearate, lead stearate, aluminum stearate, calcium stearate, and magnesium stearate; fatty acid amides such as stearic acid amides, oleic acid amides, erucic acid amides, methylenebisstearic acid amides, and ethylenebisstearic acid amides; fatty acid esters such as stearic acid monoglyceride, stearyl stearate, and hardened oils; higher alcohols such as stearyl alcohol and the like. Among them, fatty acids are preferable, and stearic acid is more preferable, from the viewpoint that they are less likely to affect the performance of the negative electrode material, are easily handled because they are solid at room temperature, are uniformly dispersed to dissolve at the temperature in the step (a), disappear in a process before graphitization treatment, and are inexpensive.

In a case in which the mixture contains the dispersant, the amount thereof is not particularly limited. For example, the content rate of the dispersant with respect to the whole mixture may be from 0.1% by mass to 20% by mass, may be from 0.5% by mass to 10% by mass, or may be from 0.5% by mass to 5% by mass.

The mixture preferably contains the graphitization catalyst from the viewpoint of promoting the graphitization of the graphitizable aggregate or the graphitizable binder. The type of the graphitization catalyst is not particularly limited. Specifically, examples of the graphitization catalysts include substances having a graphitization catalyst action such as silicon, iron, nickel, titanium, and boron; and carbides, oxides, and nitrides of these substances.

In a case in which the mixture contains the graphitization catalyst, the amount thereof is not particularly limited. For example, the content rate of the graphitization catalyst with respect to the whole mixture may be from 0.1% by mass to 50% by mass, may be from 0.5% by mass to 40% by mass, or may be from 0.5% by mass to 30% by mass.

In the step (b), the mixture obtained in the step (a) is molded to obtain the molded product. Preferably, the mixture may be formed into a predetermined shape by a uniaxial press or the like. By molding in this way, it is possible to increase a filling amount in a graphitizing furnace, when graphitizing the mixture, to improve productivity and to improve the effect of the graphitization catalyst.

In the step (b), the method of molding the mixture is not particularly limited. Examples of the method include a molding method in which the mixture is placed in a container such as a mold and pressed in a uniaxial direction, a vibration molding method in which the mixture is placed in a container such as a mold, a heavy weight is placed on the upper surface, and vibration and impact are applied to the mold, and an extrusion molding method in which the mixture is extruded from a nozzle or the like with a horizontal push press.

In the step (b), the density of the obtained molded product is 1.3 $g/cm^3$ or less, from the viewpoint of the productivity of the negative electrode material and the cycle characteristics of a lithium-ion secondary battery, the density is preferably from 0.8 $g/cm^3$ to 1.3 $g/cm^3$, more preferably from 1.0 $g/cm^3$ to 1.25 $g/cm^3$, and still more preferably from 1.05 $g/cm^3$ to 1.2 $g/cm^3$. Thereby, after obtaining the molded product with a relatively low density, the thus obtained molded product is graphitized, and then the graphitized product can be ground. In this case, the graphitized product can be ground more easily than in a case in which the graphitized product obtained by using the molded product with a relatively high density is ground. As a result, there is a tendency that the ground product with a low specific surface area can be obtained. By using the negative electrode material including the ground product with a low specific surface area for the production of the lithium-ion secondary battery, a contact area of the negative electrode material with the electrolytic solution can be reduced. Thereby, there is a tendency that the decomposition reaction of the electrolytic solution can be reduced to make the battery life long, and the lithium-ion secondary battery excellent in the cycle characteristics can be manufactured.

As described above, it is considered that lowering the density of the graphitized molded product has an advantageous effect on improving the performance of a lithium-ion secondary battery. For example, there is a tendency that the density of the graphitized molded product can be adjusted to be low by reducing the binder-derived fixed carbon. From the viewpoint of lowering the density of the graphitized molded product, binders having a low fixed carbon rate and exhibiting adhesiveness, such as corn starch, tapioca starch, PVA, and CMC are suitably used.

The amount of fixed carbon of the graphitizable binder in the mixture is preferably 20% by mass or less, more preferably 15% by mass or less, still more preferably 10% by mass or less, and particularly preferably 5% by mass or less, with respect to a total of 100% by mass of the aggregate and the binder (before graphitization). The lower the amount of fixed carbon in the graphitizable binder in the mixture, the higher the coke ratio in the mixture, which tends to improve the discharge capacity of a lithium-ion secondary battery.

The lower limit of the amount of fixed carbon of the graphitizable binder in the mixture is not particularly limited may be 0.5% by mass or more or may be 1.0% by mass or more, with respect to a total of 100% by mass of the aggregate and the binder (before graphitization).

Heat treatment is preferably performed on the molded product obtained in the step (b) before the molded product is graphitized in the step (c). By performing the heat treatment, an organic component that is contained in the mixture and that does not contribute to the graphitization is removed, and gas generation in the graphitization treatment or the like tends to be reduced.

The temperature of the above-mentioned heat treatment is not particularly limited, and is preferably lower than a heat treatment temperature in the step (c). For example, the above-mentioned heat treatment may be performed in the range of 500°C to 1000°C.

In the step (c), the molded product obtained in the step (b) is graphitized. A method of graphitizing the molded product is not particularly limited as long as the graphitizable components contained in the mixture can be graphitized. For example, a method of heat-treating the mixture in an atmosphere in which the mixture is difficult to oxidize can be mentioned. The atmosphere in which the mixture is difficult to oxidize is not particularly limited, and examples thereof include inert atmospheres such as nitrogen and argon, and vacuum.

For example, the temperature of the heat treatment for the graphitization may be 1500°C or more, may be 2000°C or more, may be 2500°C or more, or may be 2800°C or more. The upper limit of the temperature of the heat treatment is not particularly limited, and for example, may be 3200°C or less. When the temperature of the heat treatment is 1500°C or more, the graphitization tends to proceed easily due to changes in crystals. When the temperature of the heat treatment is 2000°C or more, graphite crystals tend to develop better. On the other hand, when the temperature of the heat treatment for the graphitization is 3200°C or less, sublimation of a part of the graphite tends to be reduced.

In the step (d), the graphitized product obtained in the step (c) is ground to obtain the ground product. The methods of the grinding is not particularly limited, and the grinding can be performed by a known method using a jet mill, a vibration mill, a pin mill, a hammer mill or the like. The ground product may be adjusted in particle size so as to have a desired size. A method of adjusting the particle size is not particularly limited, and examples thereof include a method using the above-mentioned grinding device, a method using a sieve and the like.

As necessary, (e) a step of disposing low crystalline carbon on at least a part of the surface of the ground product, (f) a step of mixing the ground product with other negative electrode active material(s), or the like may be performed to the ground product obtained in the step (d).

Examples of a method of disposing the low crystalline carbon on at least a part of the surface of the ground product in the step (e) include a method of mixing a material capable of being the low crystalline carbon by heat treatment (resin or the like) and the ground product and heat-treating the mixture. In a case in which the low crystalline carbon is disposed on at least a part of the surface of the ground product, input and output characteristics such as rapid charge and discharge characteristics of the lithium-ion secondary battery in which the ground product is used as the negative electrode material tend to be improved.

[Other Step(s)]

The method of manufacturing the negative electrode material of the present disclosure may include a step other than the steps described above.

For example, the method of manufacturing the negative electrode material may include a step of attaching an organic compound to the surface of the secondary particles after graphitization and heat-treating. By attaching an organic compound to the surface of the secondary particles and performing heat treatment, the organic compound attached to the surface changes to low crystalline carbon. Thereby, the surface of the graphite particles can be coated with low crystalline carbon.

The method of attaching an organic compound to the surface of the secondary particles is not particularly limited. Examples thereof include a wet method in which after dispersing and mixing secondary particles in a mixed solution obtained by dissolving or dispersing an organic compound in a solvent, the solvent is removed to adhere the organic compound; and a dry method in which mechanical energy is applied to the mixture obtained by mixing the secondary particles and a solid organic compound to adhere the organic compound.

The organic compound is not particularly limited as long as it can be converted to low crystalline carbon by heat treatment (carbon precursor). Examples include petroleum pitch, naphthalene, anthracene, phenanthroline, coal tar, phenolic resin, polyvinyl alcohol, and the like. The organic compound may be used singly by one type, or may be used in combination of two or more types.

The heat treatment temperature when heat-treating the secondary particles having the organic compound attached to the surface is not particularly limited as long as it is temperature at which the organic compound attached to the surface of the secondary particles is converted to low crystalline carbon, and for example it is preferably from 400°C to 1500°C. From the viewpoint of particularly enhancing high temperature resistance, it is more preferably 1000°C to 1500°C. The heat treatment is preferably performed in an inert gas atmosphere such as a nitrogen atmosphere.

In the step (f), the method of mixing the ground product with other negative electrode active material(s) is not particularly limited. By mixing the ground product with other negative electrode active material(s), the desired characteristics of the lithium-ion secondary battery can be improved as compared with the case in which only the ground product is used as the negative electrode active material. Examples of other negative electrode active material(s) include graphite particles such as natural graphite and artificial graphite, particles containing an element capable of occluding and releasing lithium-ions and are not limited to the above. The element capable of occluding and releasing lithium-ions are not particularly limited, and examples thereof include Si, Sn, Ge, In and the like.

The ground product obtained in the step (f) may include particles in a state in which a plurality of the flat graphite particles is aggregated or bonded, or may include particles (hereinafter, also referred to as graphite secondary particles) in a state in which a plurality of the flat graphite particles is aggregated or bonded such that main surfaces of the flat graphite particles are not parallel to each other.

In a case in which the ground product is in a state of the graphite secondary particles, the phenomenon that the particles of the negative electrode material are oriented along the direction of a current collector when the press is performed to increase the density of the negative electrode, is reduced, and the path of lithium-ions entering and exiting from the negative electrode material tends to be sufficiently secured.

Further, by including the particles in a state in which a plurality of the flat graphite particles is aggregated or bonded, voids between a plurality of the flat graphite particles reduce the effect of pressure applied during pressing to individual graphite particles and disruption of the graphite particles, generation of cracks, or the like tends to be reduced. As a result, there is a tendency that the compressive load of the graphite particles is improved, and the Li deposition resistance becomes excellent.

In the present disclosure, "flat graphite particles" refers to non-spheroidal graphite particles having anisotropy in shape. Examples of the flat graphite particles include graphite particles having a scaly shape, a flaky shape, a partially lumpy shape, or the like.

The aspect ratio represented by A/B of the flat graphite particles is preferably, for example, from 1.2 to 20, and is more preferably from 1.3 to 10 when A is a length in a major axis direction and B is a length in a minor axis direction. When the aspect ratio is 1.2 or more, there is a tendency that a contact area between particles increases, and conductivity is further improved. When the aspect ratio is 20 or less, input and output characteristics such as rapid charge and discharge characteristics of the lithium-ion secondary battery tend to be further improved.

The aspect ratio is obtained by observing graphite particles with a microscope, arbitrarily selecting 100 graphite particles, measuring A/B of each of the selected particles, and obtaining an arithmetic mean value of the measured values. In observing the aspect ratio, the length A in the major axis direction and the length B in the minor axis direction are measured as follows. That is, in a projected image of the graphite particles that is observed using a microscope, two parallel tangent lines circumscribing the outer periphery of the graphite particles, which are a tangent line a1 and a tangent line a2 having a maximum distance therebetween, are selected, and a distance between the tangent line a1 and the tangent line a2 is defined as the length A in the major axis direction. In addition, two parallel tangent lines circumscribing the outer periphery of the graphite particles, which are a tangent line b1 and a tangent line b2 having a minimum distance, are selected, and a distance between the tangent line b1 and the tangent line b2 is defined as the length B in the minor axis direction.

In the present disclosure, the phrase "main surfaces are not parallel" regarding the graphite secondary particles means that the largest cross-sectional surfaces (the main surfaces) of a plurality of the flat graphite particles are not aligned in a certain direction. Whether or not the main surfaces of a plurality of flat graphite particles are not parallel to each other can be confirmed by microscopic observation. When a plurality of flat graphite particles is aggregated or bonded in a state in which the main surfaces of the graphite secondary particles are not parallel to each other, there is a tendency that an increase in an orientation index of the main surfaces of the flat graphite particles in the negative electrode is reduced, expansion of the negative electrode due to charging is reduced, and thereby cycle characteristics of the lithium-ion secondary battery is improved.

Graphite secondary particles may partially include a structure in which a plurality of the flat graphite particles is aggregated or bonded such that the main surfaces of the flat graphite particles are parallel to each other.

For example, the average particle size of the flat graphite particles is preferably from 1 µm to 50 µm, more preferably from 1 µm to 25 µm, and still more preferably from 1 µm to 15 µm, from the viewpoint of ease of aggregation or bonding. Examples of a method of measuring the average particle size of the flat graphite particles includes a method of measuring it with a scanning electron microscope, and for example the average particle size of the flat graphite particles is an arithmetic mean value of the particle sizes of 100 flat graphite particles.

The flat graphite particles and the raw material thereof are not particularly limited and examples thereof include artificial graphite, scaly natural graphite, flaky natural graphite, coke, resin, tar, pitch and the like. Among them, graphite obtained from artificial graphite, natural graphite, or coke has high crystallinity and becomes soft particles, so that the density of the negative electrode tends to be easily increased.

The negative electrode material may include spheroidal graphite particles. In a case in which the negative electrode material includes spheroidal graphite particles, because the spheroidal graphite particles themselves have a high density, there is a tendency to reduce the press pressure required to obtain a desired electrode density.

Examples of the spheroidal graphite particles include spheroidal artificial graphite, spheroidal natural graphite and the like. The spheroidal graphite particles are preferably high density graphite particles from the viewpoint of densification of the negative electrode. Specifically, the spheroidal graphite particles that have been subjected to particle spheroidization treatment to increase the tap density are preferable. Further, there is a tendency that the negative electrode material layer containing the spheroidal natural graphite is excellent in peeling strength, and is less likely to peel off from a current collector even if the layer is pressed with strong strength.

In a case in which the negative electrode material includes the spheroidal graphite particles, the negative electrode material may include the above-mentioned flat graphite particles and the spheroidal graphite particles. In a case in which the negative electrode material includes the above-mentioned flat graphite particles and the spheroidal graphite particles, the ratio of the two kinds of particles is not particularly limited, and can be set according to a desired electrode density, pressure conditions at the time of pressing, desired battery characteristics, or the like.

Examples of a case in which the negative electrode material includes the flat graphite particles and the spheroidal graphite particles include a state in which the flat graphite particles and the spheroidal graphite particles are mixed, a state in which the flat graphite particles and the spheroidal graphite particles are bonded (hereinafter, also referred to as flat-spheroidal composite particles). Examples of the flat-spheroidal composite particles include particles in a state in which the flat graphite particles and the spheroidal graphite particles are bonded via an organic carbide.

For example, the above-mentioned flat-spheroidal composite particles can be manufactured by using a mixture containing the flat graphite particles or the raw material thereof and the spheroidal graphite particles as the mixture in the step (a).

<<Negative Electrode Material Composition for Lithium-Ion Secondary Battery>>

A negative electrode material composition for a lithium-ion secondary battery of the present invention includes the negative electrode material for a lithium-ion secondary battery of the present disclosure, a binder, and a solvent. The negative electrode material composition for a lithium-ion secondary battery of the present disclosure may be in the form of a slurry obtained by kneading a negative electrode material for a lithium-ion secondary battery and a binder together with a solvent.

The kneading can be performed by a dispersing device, such as a disper stirrer or a planetary kneader.

The binder used for preparing the negative electrode material composition for a lithium-ion secondary battery is not particularly limited. Examples of the binder include: a styrene-butadiene copolymer (SBR); a homopolymer or copolymer of ethylenically unsaturated carboxylic acid ester, such as methyl acrylate, methyl methacrylate, ethyl acrylate, ethyl methacrylate, butyl acrylate, butyl methacrylate, hydroxyethyl acrylate, or hydroxyethyl methacrylate, or an ethylenically unsaturated carboxylic acid, such as acrylic acid, methacrylic acid, itaconic acid, fumaric acid, or maleic acid; a polymeric compound having high ionic conductivity, such as polyvinylidene fluoride, polyethylene oxide, polyepichlorohydrin, polyphosphazene, polyacrylonitrile, or polymethacrylonitrile. When the negative electrode material composition for a lithium-ion secondary battery contains a binder, the amount of the binder is not particularly limited. For example, the amount may be from 0.5 parts by mass to 20 parts by mass with respect to 100 parts by mass in total of the binder and the negative electrode material for a lithium-ion secondary battery.

The negative electrode material composition for a lithium-ion secondary battery may contain a thickener. Examples of the thickener include carboxymethyl cellulose, methyl cellulose, hydroxymethyl cellulose, ethyl cellulose, polyvinyl alcohol, polyacrylic acid or a salt thereof, oxidized starch, phosphorylated starch, and casein. When the negative electrode material composition for a lithium-ion secondary battery contains a thickener, the amount of the thickener is not particularly limited. For example, the amount may be from 0.1 parts by mass to 5 parts by mass with respect to 100 parts by mass of the negative electrode material for a lithium-ion secondary battery.

The negative electrode material composition for a lithium-ion secondary battery may contain a conductive aid. Examples of the conductive aid include: a carbon material, such as carbon black, graphite, or acetylene black; and an inorganic compound, such as an oxide that exhibits conductivity or a nitride that exhibits conductivity. When the negative electrode material composition for a lithium-ion secondary battery contains a conductive aid, the amount of the conductive aid is not particularly limited. For example, the amount may be from 0.5 parts by mass to 15 parts by mass with respect to 100 parts by mass of the negative electrode material for a lithium-ion secondary battery.

<<Negative Electrode for Lithium-Ion Secondary Battery>>

The negative electrode for a lithium-ion secondary battery of the present disclosure includes: a negative electrode material layer including the negative electrode material for a lithium-ion secondary battery of the present disclosure; and a current collector. The negative electrode for a lithium-ion secondary battery may include other component(s) in addition to the negative electrode material layer including the negative electrode material for a lithium-ion secondary battery of the present disclosure and a current collector, as necessary.

The negative electrode for a lithium-ion secondary battery can be produced, for example, by preparing the negative electrode material composition for a lithium-ion secondary battery of the present disclosure described above and coating it on a current collector to form a negative electrode material layer, or by molding the negative electrode material composition for a lithium-ion secondary battery into a shape such as a sheet or pellet and integrating it with a current collector.

The material for the current collector is not particularly limited, and may be selected from aluminum, copper, nickel, thitanium, stainless steel and the like. The form of the current collector is not particularly limited, and may be selected from a foil, a perforated foil, a mesh and the like. Further, a porous material, such as a porous metal (foamed metal), a carbon paper, or the like may also be used for a current collector.

In the case in which the negative electrode material composition for a lithium-ion secondary battery is applied to a current collector to form a negative electrode material layer, the method thereof is not particularly limtied, and a known method, such as a metal mask printing method, an electrostatic coating method, a dip coating method, a spray coating method, a roll coating method, a doctor blade method, a comma coating method, a gravure coating method, or a screen printing method, may be adopted. After the application of the negative electrode material composition for a lithium-ion secondary battery to the current collector, the solvent contained in the negative electrode material composition for a lithium-ion secondary battery is removed by drying. The drying may be performed using, for example, a hot air dryer, an infrared dryer, or a combination of these devices. If necessary, rolling treatment may be performed on the negative electrode material layer. The rolling treatment can be performed by a method such as using a flat plate press, or a calender roll.

In the case in which the negative electrode material composition for a lithium-ion secondary battery formed in a shape of a sheet, pellet or the like is integrated with a current collector to form a negative electrode material layer, the method for the integration is not particularly limited. For example, the integration can be performed using a roll, a flat plate press, or a combination of these means. The pressure applied upon the integration of the current collector and the negative electrode material composition for a lithium-ion secondary battery is, for example, preferably from around 1 MPa to 200 MPa.

The negative electrode density of the negative electrode material layer is not particularly limited. For example, the negative electrode density is preferably from 1.1 $g/cm^3$ to 1.8 $g/cm^3$, more preferably from 1.1 $g/cm^3$ to 1.7 $g/cm^3$, and further preferably from 1.1 $g/cm^3$ to 1.6 $g/cm^3$. When the negative electrode density is 1.1 $g/cm^3$ or more, increase in electric resistance tends to be restrained, whereby the capacity tends to be increased. When the negative electrode density is 1.8 $g/cm^3$ or less, deterioration in input characteristics and cycle characteristics tends to be restrained.

<<Lithium-Ion Secondary Battery>>

The lithium-ion secondary battery of the present disclosure includes: the negative electrode for a lithium-ion secondary battery of the present disclosure; a positive electrode; and an electrolytic solution.

The positive electrode can be obtained by forming a positive electrode material layer on a current collector in a similar manner to the method of producing a negative electrode described above. Examples of the current collector include those obtained by forming a metal or a metal alloy of aluminum, titanium or stainless steel in a shape of a foil, a perforated foil, a mesh or the like.

The positive electrode material used for forming the positive electrode material layer is not particularly limited. Examples of the positive electrode material include a metallic compound (for example, a metal oxide, a metal sulfide, etc.) and a conductive polymeric material that are capable of accomodating lithium-ion doping or intercalation. More specific examples include: a metal compound, such as lithium cobaltate ($LiCoO_2$), lithium nickelate ($LiNiO_2$), lithium manganate ($LiMnO_2$), a composite oxide thereof ($LiCo_xNi_yMn_zO_2$, x + y + z = 1), a composite oxide containing an additional element M' ($LiCo_aNi_b Mn_cM'_dO_2$, a + b + c + d = 1, M ': Al, Mg, Ti, Zr or Ge), spinel-type lithium manganese oxide ($LiMn_2O_4$), a lithium vanadium compound, $V_2O_5$, $V_6O_{13}$, $VO_2$, $MnO_2$, $TiO_2$, $MoV_2O_8$, $TiS_2$, $V_2S_5$, $VS_2$, $MoS_2$, $MoS_3$, $Cr_3O_8$, $Cr_2O_5$, olivin-type $LiMPO_4$ (M: Co, Ni, Mn, or Fe); a conductive polymer, such as polyacetylene, polyaniline, polypyrrole, polythiophene, or polyacene; a porous carbon; and the like. One type of the positive electrode material may be used singly, or two or more types thereof may be used.

The electrolytic solution is not particularly limited, and those in which a lithium salt as an electrolyte is dissolved in a non-aqueous solvent (a so-called organic electrolytic solution) may be used, for example.

Examples of the lithium salt include $LiClO_4$, $LiPF_6$, $LiAsF_6$, $LiBF_4$, and $LiSO_3CF_3$. One type of the lithium salt may be used singly, or two or more types thereof may be used.

Examples of the non-aqueous solvent include ethylene carbonate, fluoroethylene carbonate, chloroethylene carbonate, propylene carbonate, butylene carbonate, vinylene carbonate, cyclopentanone, cyclohexylbenzene, sulfolane, propanesulton, 3-methylsulfolane, 2,4-dimethylsulfolane, 3-methyl-1,3-oxazolidine-2-one, γ-butyrolactone, dimethyl carbonate, diethyl carbonate, ethyl methyl carbonate, methyl propyl carbonate, butyl methyl carbonate, ethyl propyl carbonate, butyl ethyl carbonate, dipropyl carbonate, 1,2-dimethoxyethane, tetrahydrofuran, 2-methyltetrahydrofuran, 1,3-dioxolane, methyl acetate, ethyl acetate, trimethylphosphate ester, and triethylphosphate ester. One type of the non-aqueous solvent may be used singly, or two or more types thereof may be used.

The form of the positive electrode and the negative electrode in the lithium-ion secondary battery is not particularly limited. For example, the positive electrode, the negative electrode, and an optional separator disposed between the positive electrode and the negative electrode may be spirally wound, or laminated as a flat plate.

The separator is not particularly limited, and for example, a nonwoven fabric, a cloth, a microporous film, or a combination thereof, made of a resin, may be used. Examples of the resin include those containing a polyolefin, such as polyethylene or polypropylene, as a main component. In a case in which the lithium-ion secondary battery has a structure in which the positive electrode and a negative electrode do not contact each other directly, the separator does not need to be used.

The shape of the lithium-ion secondary battery is not particularly limited. Examples include a laminated battery, a paper battery, a button battery, a coin battery, a stacked battery, a cylindrical battery, and a square battery.

The lithium-ion secondary battery of the present disclosure is suitable as a lithium-ion secondary battery having a large capacity used for electric vehicles, power tools, power storage devices and the like.

Examples

Hereinafter, the present disclosure will be described in detail below by way of Examples. However, the invention is not limited to these Examples.

[Example 1]

Petroleum-derived raw coke (needle coke), was used as a raw material for graphite particles.

The above raw coke was coarsely ground with a hammer mill. The crushed material was sieved using a sieve with an opening of 3 mm, and the unsieved material was sieved using a sieve with an opening of 1 mm to recover granules with a particle size of 1 mm to 3 mm.

The obtained coke particles were ground and classified using a roller mill to obtain flat coke particles with D50 of 9 $\mu$m. The standard deviation ($\sigma$) of the particle size distribution of the coke particles was 0.14.

85 parts by mass of the obtained coke particles, 15 parts by mass of coal tar pitch (softening point:80°C to 130°C, quinoline insoluble content: 15% by mass or less, fixed carbon: 50% by mass, "pitch 1" in Table 1) and 15 parts by mass of methylnaphthalene, which is an aromatic compound, with respect to a total of 100 parts by mass of the coke particles and the coal tar pitch were kneaded with a kneader to obtain a mixture.

Next, the obtained mixture was molded at room temperature by a uniaxial press to a density of 1.3 g/cm$^3$ or less to obtain a molded product. Then, the obtained molded product was heat-treated at 850°C for 8 hours in a nitrogen atmosphere, and then graphitized at 3000°C for 30 hours. The obtained graphitized material was ground to obtain particles. Thereafter, the obtained particles were sieved through a 280-mesh screen to obtain graphite particles as a negative electrode material. When the volume-based particle size distribution of the graphite particles was determined using a laser diffraction particle size distribution analyzer (SALD3100, Shimadzu Corporation), D10 was 5.5 $\mu$m, D50 was 10.0 $\mu$m, D90 was 25.5 $\mu$m, and D99.9 was 69.9 $\mu$m. The standard deviation ($\sigma$) of the particle size distribution of the graphite particles was 0.26.

[Example 2]

Graphite particles as a negative electrode material were obtained in the same manner as in Example 1 except that the coke particles and coal tar pitch were mixed by stirring using a stirrer instead of kneading using a kneader.

The volume-based particle size distribution of the graphite particles was determined in the same manner as in Example 1. The results are shown in Table 1.

[Example 3]

Graphite particles as a negative electrode material were obtained in the same manner as in Example 1 except that the coal tar pitch (softening point : 80°C to 130°C, quinoline insoluble content : 15% by mass or less, fixed carbon : 50% by mass, "pitch 1" in Table 1) was changed to coal tar pitch (softening point : 220°C to 280°C, quinoline insoluble content : 20% by mass or less, fixed carbon : 70% by mass, "pitch 2" in Table 1).

The volume-based particle size distribution of the graphite particles was determined in the same manner as in Example 1. The results are shown in Table 1.

[Examples 4 to 6]

Graphite particles, as a negative electrode material, were obtained in the same manner as in Examples 1 to 3, except that coke particles with D50 of 5 $\mu$m and the standard deviation ($\sigma$) of the particle size distribution of 0.16 were used to produce the graphite particles in Examples 1 to 3.

The volume-based particle size distribution of the graphite particles was determined in the same manner as in Example 1. The results are shown in Table 1.

[Example 7]

The graphite particles produced in Example 1 were treated with the coal tar pitch ("pitch 2" in Table 1) under the following conditions to produce graphite particles (hereinafter also referred to as "coated graphite particles") on which the surface were treated with low crystalline carbon.

100 parts by mass of the graphite particles produced in Example 1 and 4 parts by mass of the coal tar pitch were mixed. Next, the obtained mixture was heated to 1200°C at a rate of 200°C/hour under nitrogen flow, and held at 1200°C (firing treatment temperature) for 2 hours. After that, the fired graphite particles were ground with a cutter mill and sieved through a 280-mesh screen to obtain the coated graphite particles through the screen as a negative electrode material.

The volume-based particle size distribution of the coated graphite particles was determined in the same manner as in Example 1. The results are shown in Table 1.

[Example 8]

The graphite particles produced in Example 6 were treated with the coal tar pitch ("Pitch 2" in Table 1) under the same conditions as in Example 7 to produce coated graphite particles.

The volume-based particle size distribution of the coated graphite particles was determined in the same manner as in Example 1. The results are shown in Table 1.

[Example 9]

85 parts by mass of the coke particles with D50 of 9 $\mu$m used in Example 1, 5 parts by mass of the coal tar pitch 2, and 10 parts by mass of starch (fixed carbon : 10% by mass) were stirred and mixed using a stirrer to obtain a mixture.

Next, the obtained mixture was molded at room temperature by a uniaxial press to a density of 1.3 g/cm$^3$ or less to obtain a molded product. Then, the obtained molded product was heat-treated at 850°C for 8 hours in a nitrogen atmosphere, and then graphitized at 3000°C for 30 hours. The obtained graphitized material was ground to obtain particles. Thereafter, the obtained particles were sieved through a 280-mesh screen to obtain graphite particles as a negative electrode material. When the volume-based particle size distribution of the graphite particles was determined using a laser diffraction particle size distribution analyzer (SALD3100, Shimadzu Corporation), D10 was 6.7 $\mu$m, D50 was 12.7 $\mu$m, D90 was 27.9 $\mu$m, and D99.9 was 68.8 $\mu$m. The standard deviation ($\sigma$) of the particle size distribution of the graphite particles was 0.24.

[Example 10]

90 parts by mass of the coke particles with D50 of 9 $\mu$m used in Example 1, and 10 parts by mass of starch (fixed carbon : 10% by mass) were stirred and mixed using a stirrer to obtain a mixture.

Next, the obtained mixture was molded at room temperature by a uniaxial press to a density of 1.3 g/cm$^3$ or less to obtain a molded product. Then, the obtained molded product was heat-treated at 850°C for 8 hours in a nitrogen atmosphere, and then graphitized at 3000°C for 30 hours. The obtained graphitized material was ground to obtain particles. Thereafter, the obtained particles were sieved through a 280-mesh screen to obtain graphite particles as a negative electrode material. When the volume-based particle size distribution of the graphite particles was determined using a laser diffraction particle size distribution analyzer (SALD3100, Shimadzu Corporation), D10 was 6.8 $\mu$m, D50 was 11.5 $\mu$m, D90 was 20.3 $\mu$m, and D99.9 was 47.7 $\mu$m. The standard deviation ($\sigma$) of the particle size distribution of the graphite particles was 0.19.

[Comparative Example 1]

Petroleum-derived calcined coke (semi-needle coke), which is flat coke particles with D50 of 16 $\mu$m, was used

as a raw material for graphite particles.

Graphite particles were obtained in the same manner as in Example 1 except that 85 parts by mass of the obtained coke particles, 15 parts by mass of the coal tar pitch and 15 parts by mass of a graphitization catalyst SiC, with respect to a total of 100 parts by mass of the coke particles and the coal tar pitch were kneaded with a kneader.

The volume-based particle size distribution of the graphite particles was determined in the same manner as in Example 1. The results are shown in Table 1.

[Comparative Example 2]

The raw coke used in Example 1 was ground and classified using a roller mill to obtain flat coke particles with D50 of 14 μm. The coke particles were packed in a graphitization case without being mixed with coal tar pitch, fired at 850°C to evaporate impurities in the mixture, and then graphitized at 3000°C. Thereafter, the obtained particles were sieved through a 280-mesh screen to obtain graphite particles as a negative electrode material. 50% by mass of these graphite particles and 50% by mass of flaky natural graphite with D50 of 3 μm were combined with a spheronizing machine to obtain graphite composite particles. The volume-based particle size distribution of the graphite composite particles was determined in the same manner as in Example 1. The results are shown in Table 1.

[Comparative Example 3]

Petroleum-derived raw coke (needle coke), was used as a raw material for graphite particles.

The above coke was coarsely ground with a hammer mill. The crushed material was sieved using a sieve with an opening of 3 mm, and the unsieved material was sieved using a sieve with an opening of 1 mm to recover granules with a particle size of 1 mm to 3 mm. The granules obtained were then ground in a roller mill to obtain particles with the average particle size of 200 μm. The obtained particles was ground and classified using a roller mill to obtain flat coke particles with D50 of 16 μm. The coke particles were packed in a graphitization case without being mixed with coal tar pitch, fired at 850°C to evaporate impurities in the mixture, and then graphitized at 3000°C. Thereafter, the obtained particles were sieved through a 280-mesh screen to obtain graphite particles as a negative electrode material. The volume-based particle size distribution of the graphite particles was determined in the same manner as in Example 1. The results are shown in Table 1.

[Comparative Examples 4 and 5]

Petroleum-derived calcined coke (needle coke) was ground and classified using a roller mill to obtain flat coke particles with D50 of 12 μm. The coke particles were packed in a graphitization case without being mixed with coal tar pitch, fired at 850°C to evaporate impurities in the mixture, and then graphitized at 3000°C or 2800°C. Thereafter, the obtained particles were sieved through a 280-mesh screen to obtain graphite particles as a negative electrode material. The volume-based particle size distribution of the graphite particles was determined in the same manner as in Example 1. The results are shown in Table 1.

[Comparative Example 6]

Graphite particles, as a negative electrode material, were obtained in the same manner as in Comparative Examples 4 and 5, except that coke particles with D50 of 12 μm used for producing graphite particles were used and the graphitization temperature was changed to 2600°C in Comparative Examples 4 and 5.

The volume-based particle size distribution of the graphite particles was determined in the same manner as in Example 1. The results are shown in Table 1.

Hereinafter, the conditions of manufacturing the graphite particles and coated graphite particles, which are a negative electrode material, and the result of the particle size distribution of the graphite particles and coated graphite particles are shown in Table 1. In addition, the unit of the amount of coke and the amount of binder in Table 1 means "parts by mass". The amount of fixed carbon (% by mass) of the binder in Table 1 means the ratio to the total 100% by mass of coke and binder (before graphitization).

[Table 1]

| | | Coke type | Coke particle size (μm) | Amount of coke (parts by mass) | Standard deviation of particle size distribution of coke | Kneading | Binder type | Amount of binder (parts by mass) | Amount of fixed carbon of binder (% by mass) | Firing temperature (°C) | Graphitization temperature (°C) | Coating treatment | D10 (μm) | D50 (μm) | D90 (μm) | D99.9 (μm) | D90/D10 | σ |
|---|---|---|---|---|---|---|---|---|---|---|---|---|---|---|---|---|---|---|
| Examples | 1 | Needle | 9 | 85 | 0.14 | Yes | Pitch 1 | 15 | 7.5 | 850 | 3000 | No | 5.5 | 100 | 25.5 | 69.9 | 4.6 | 0.26 |
| | 2 | Needle | 9 | 85 | 0.14 | No | Pitch 1 | 15 | 7.5 | 850 | 3000 | No | 5.5 | 10.6 | 23.2 | 64.8 | 4.2 | 0.25 |
| | 3 | Needle | 9 | 85 | 0.14 | No | Pitch 2 | 15 | 10.5 | 850 | 3000 | No | 6.4 | 14.2 | 31.0 | 70.6 | 4.9 | 0.26 |
| | 4 | Needle | 5 | 85 | 0.16 | Yes | Pitch 1 | 15 | 7.5 | 850 | 3000 | No | 3.9 | 7.9 | 199 | 55.8 | 5.1 | 0.28 |
| | 5 | Needle | 5 | 85 | 0.16 | No | Pitch 1 | 15 | 7.5 | 850 | 3000 | No | 4.0 | 8.4 | 21.4 | 53.5 | 5.3 | 0.29 |
| | 6 | Needle | 5 | 85 | 0.16 | No | Pitch 2 | 15 | 10.5 | 850 | 3000 | No | 4.3 | 9.8 | 26.5 | 57.2 | 6.2 | 0.31 |
| | 7 | Needle | 9 | 85 | 0.14 | Yes | Pitch 1 | 15 | 7.5 | 850 | 3000 | Yes | 6.3 | 11.9 | 27.9 | 68.8 | 4.8 | 0.25 |
| | 8 | Needle | 5 | 85 | 0.16 | No | Pitch 2 | 15 | 10.5 | 850 | 3000 | Yes | 4.7 | 10.5 | 28.9 | 83.5 | 6.2 | 0.31 |
| | 9 | Needle | 9 | 85 | 0.14 | No | Picth 2/Starch | 5/10 | 45 | 850 | 3000 | No | 6.7 | 12.7 | 27.9 | 68.8 | 4.2 | 0.24 |
| | 10 | Needle | 9 | 90 | 0.14 | No | starch | 10 | 1.0 | 850 | 3000 | No | 6.8 | 11.5 | 20.3 | 47.7 | 3.0 | 0.19 |
| Comparative Examples | 1 | Semi-needle | 16 | 85 | 0.30 | Yes | Pitch 1 | 15 | 7.5 | 850 | 3000 | No | 8.5 | 21.1 | 40.9 | 90.3 | 4.8 | 0.26 |
| | 2 | Needle | 14 | 100 | 0.15 | No | None | 0 | 0 | 850 | 3000 | No | 2.1 | 5.2 | 18.3 | 43.4 | 8.8 | 0.37 |
| | 3 | Needle | 16 | 100 | 0.26 | No | None | 0 | 0 | 850 | 3000 | No | 12.4 | 19.5 | 27.7 | 58.6 | 2.2 | 0.15 |
| | 4 | Needle | 12 | 100 | 0.18 | No | None | 0 | 0 | 850 | 3000 | No | 8.0 | 12.0 | 17.7 | 45.7 | 2.2 | 0.15 |
| | 5 | Needle | 12 | 100 | 0.18 | No | None | 0 | 0 | 850 | 2800 | No | 8.7 | 15.5 | 27.7 | 88.6 | 3.2 | 0.19 |
| | 6 | Needle | 12 | 85 | 0.18 | Yes | Pitch 1 | 15 | 7.5 | 850 | 2600 | No | 8.0 | 12.4 | 18.4 | 56.5 | 2.3 | 0.16 |

22

Using the negative electrode materials obtained in each Example and each Comparative Example, the physical properties shown below were measured and evaluated. The results are shown in Tables 2 and 3.

(Specific Surface Area)

Nitrogen gas was adsorbed, using a gas adsorption apparatus (ASAP2010, manufactured by Shimadzu Corporation), on a sample obtained by filling a measurement cell with the negative electrode material and performing preheating treatment at 200°C while degassing under vacuum. The obtained sample was subjected to BET analysis by the 5-point method to determine the specific surface area.

(Tap Density)

100 cm$^3$ of sample powder of the graphite particles was put into a graduated flat-bottomed test tube (KRS-406, manufactured by Kuramochi Scientific Instruments Co., Ltd.) with capacity of 150cm$^3$, and the graduated flat-bottomed test tube was capped. The 0 times tap density was determined from the mass and volume of the sample powder before dropping the graduated flat-bottomed test tube. Then, the 30 times tap density and 250 times tap density were respectively determined from the mass and volume of the sample powder after dropping the graduated flat-bottomed test tube 30 times and 250 times from a height of 5 cm.

(Degree of Graphitization)

10 parts by mass or 20 parts by mass of silicon powder (for example, National Institute of Standards and Technology NIST, SRM640f) are mixed with the graphite particles, and the obtained mixture was placed in a sample holder for X-ray diffraction measurement. Using an X-ray diffractometer (for example, an X-ray diffractometer manufactured by Rigaku Corporation, X-RAY DIFFRACTIOMETER MultiFlex), the diffraction angle corresponding to the (002) plane of graphite and the diffraction angle corresponding to the (111) plane of silicon were measured by X-ray diffraction measurement using a CuK$\alpha$ ray (2$\theta$ = 25° to 29°).

The correct diffraction angle of graphite was obtained by correcting the observed diffraction angles of silicon and graphite using the theoretical diffraction angle of Si (2$\theta$ = 28.442°).

The interplanar spacing (Å) of the d(002) plane of the negative electrode material was calculated using Bragg's equation (2dsin$\theta$ = n$\lambda$), and the degree of graphitization was calculated by the following equation.

$$\text{Degree of graphitization} = [(3.44\text{-interplanar spacing})/(0.086)] \times 100$$

(R Value)

The R value was determined using a Raman spectrometer (for example, XploRA PLUS manufactured by HORIBA, Ltd.) under the following conditions, the baseline of the obtained spectrum being within the following range.

- Measurement Conditions on Raman Spectrum-
- Laser wavelength: 532 nm
- Laser intensity: 100 mW or more
- Neutral density filter: 1%
- Irradiation intensity: 1 mW
- Measurement range: 1000 cm$^{-1}$ to 1800 cm$^{-1}$
- Irradiation time: 30 seconds
- Irradiation area : 1 $\mu$m$^2$
- Baseline (D band): 1100 cm$^{-1}$ to 1470 cm$^{-1}$
- Baseline (G band): 1450 cm$^{-1}$ to 1710 cm$^{-1}$
- Number of accumulated times for one particle: 2 times
- Number of particles measured: 30 particles

(Compressive Load)

A mold with a diameter of 15 mm was filled with 3.0 g of the negative electrode material, and compressed at a constant speed of 10 mm/min using an Autograph (manufactured by Shimadzu Corporation). During this compression, the distance from the bottom surface of the negative electrode material to the pressing surface was measured, and the density under pressure was calculated from the volume of the negative electrode material obtained by multiplying this distance by the bottom area of the mold. The applied pressure (kN/cm$^2$) when autograph's press hammer was equipped with a load cell and the specific density of 1.7 g/cm$^3$ was reached, was taken as the compressive load.

(Springback Rate)

A mold with a diameter of 15 mm was filled with 3.0 g of the negative electrode material, and compressed at a constant speed of 10 mm/min using an Autograph (manufactured by Shimadzu Corporation). After that, the pressure is released, and when the press surface stops moving due to elasticity, the density after releasing the pressure (g/cm$^3$) was measured. The absolute value of the difference between the reference density of 1.7 g/cm$^3$ and the density of the negative electrode material after springback was divided by the density of 1.7 g/cm$^3$ and multiplied by 100 to obtain the springback rate (%).

(Electrode Orientation)

A negative electrode of a lithium-ion secondary battery was produced as shown below and the electrode orientation was evaluated under the following conditions.

-Production of Negative Electrode of Lithium-Ion Secondary Battery-

Graphite particles (97.6 parts by mass), carboxymethyl cellulose (CMC) (1.2 parts by mass) and styrene-butadiene rubber (SBR) (1.2 parts by mass) were kneaded to prepare a slurry. This slurry was applied to a glossy surface of an electrolytic copper foil in an amount of 10 g/cm$^2$. After pre-drying at 90°C for 2 hours, the electrode density was adjusted to be 1.65 g/cm$^3$ with a roll press. After that, a curing treatment was performed by drying at 120°C for 4 hours in a vacuum atmosphere and a negative electrode material layer was formed on the electrolytic copper foil to obtain a negative electrode for a lithium-ion secondary battery.

-Evaluation of Electrode Orientation-

The obtained negative electrode for a lithium ion secondary battery was molded into a strip-shaped sheet having a width of 5 cm and an area of 600 cm$^2$, and the obtained molded product was pressed with a roll-type pressing machine under hydraulic pressure of 4 t. The linear pressure at this time was 4t/5cm=0.8t/cm. The pressed negative electrode was placed in an X-ray diffraction measurement cell, and an X-ray diffraction pattern using CuK$\alpha$ rays was measured using an X-ray diffraction measurement device (X-ray diffraction measurement device manufactured by Rigaku Corporation, X-ray DIFFRACTIOMETER MultiFlex) under the conditions of a scanning speed of 0.25°/min, a tube voltage of 40 kV, a tube current of 30 mA, a divergence slit of 1°, a scattering slit of 1°, and a receiving slit of 0.3 mm (2θ=25.5° to 27.5°, 76.5° to 78.5°). $I_{002}/I_{110}$, which is the ratio of the obtained peak intensity of the 002 diffraction line ($I_{002}$) and the peak intensity of the 110 diffraction line ($I_{110}$), was obtained, and this value was taken as the electrode orientation.

(Discharge Capacity)

The lithium-ion secondary battery produced as described above was placed in a constant temperature bath set at 25°C, constant current charging was performed at a current value of 0.2C to a voltage of 0V (V vs. Li/Li$^+$), and then constant voltage charging was performed at 0V until the current value reached 0.02C. After resting for 30 minutes, constant current discharge was performed at a current value of 0.2 C to a voltage of 1.5 V (V vs. Li/Li$^+$). The discharge capacity at this time was determined.

(SOC-Li (Li Deposition Resistance))

A lithium-ion secondary battery was produced by using the negative electrode obtained above, and the Li deposition resistance was evaluated as follows.

-Production of Lithium-Ion Secondary Battery-

The negative electrode obtained above, metallic lithium as a counter electrode, a mixture of ethylene carbonate/ethyl methyl carbonate (3:7 volume ratio) containing 1 M LiPF$_6$ and vinylene carbonate (VC) (1.0% by mass) as an electrolyte, a polyethylene microporous membrane having a thickness of 25 $\mu$m as a separator, and a copper plate having a thickness of 250 $\mu$m as a spacer were used to produce a coin cell as a lithium-ion secondary battery.

-Evaluation of Li Deposition Resistance-

The produced lithium-ion secondary battery was placed in a constant temperature bath set at 25°C, and from the first cycle to the third cycle, constant current charging was performed at a current value of 0.1C to a voltage of 0.005V (V vs. Li/Li$^+$), and then constant voltage charging was performed at 0.005V until the current value reached 0.05C. After resting for 30 minutes, constant current discharge was performed at a current value of 0.2 C to a voltage of 1.5 V (V vs. Li/Li$^+$). The discharge capacity at the 3rd cycle was defined as 1C in the Li deposition test. The charge in the fourth cycle was performed at a current density of 3C and a control voltage of 1.5V so as to charge the discharge capacity of the third cycle in 20 minutes. The first inflection point in the differential profile (dV/dQ, V is voltage, Q is electric capacity, see FIG. 1) of the charge curve obtained at the 4th cycle was defined as the starting point of Li deposition, and the capacity at this time was expressed as a percentage with respect to the discharge capacity at the 3rd cycle (it may be the charge capacity at the 4th cycle set so as to have the same capacity) to evaluate the Li deposition resistance. The result are shown in Table 3.

(Input Characteristics)

When various graphite particles other than Examples or Comparative Examples were examined for the physical property values shown in Tables 2 and 3, it was found that when the compressive load was large and D50 was small, the results of Li deposition resistance related to the input characteristics of the battery tended to be good. Therefore, multiple regression analysis was performed using the compressive load (kN/cm$^2$) and D50 ($\mu$m) as explanatory variables and the Li deposition resistance as an objective variable, and regression equation (2) was obtained. The coefficient of determination R$^2$ was 0.84.

$$\text{Li deposition resistance} = 11.3x - 0.66y + 1.4 \cdots (2)$$

The compressive load (kN/cm$^2$) and D50 ($\mu$m) measured in each Example and Comparative Example were substituted into the above formula (2), and this value was taken as the evaluation value of the input characteristics. It is considered that the higher the evaluation value of this input characteristic, the higher the measured value of Li deposition resistance tends to be.

(Curved Path ratio)

A negative electrode for a lithium ion secondary battery was obtained by forming a negative electrode material layer on an electrolytic copper foil in the same procedure as the evaluation of electrode orientation in Example 6 and Comparative Example 1.
Using the obtained negative electrode for a lithium-ion secondary battery, the curved path ratio was determined. The curved path ratio means L/T, which is the ratio of the curved path length L ($\mu$m), which is the distance from one surface in the thickness direction to the other surface through the gap inside the negative electrode material layer, and the thickness T ($\mu$m) of the negative electrode material layer.
Specifically, using a microfocus X-ray CT system SMX-160CTS (manufactured by Shimadzu Corporation), X-ray CT measurements were performed under the conditions of a tube voltage of 48 kV, an SID axis of 350 mm, an SOD axis of 3 mm, the number of multi-accumulated scans twice, and a slice pitch of 0.001065 mm. The electrodes were cut into strips of 2 mm $\times$ 15 mm for measurement. Using the obtained CT image, 3D analysis was performed with EXFact VR and ExFact Analysis for Porous Particles (both manufactured by Nippon Visual Science Co., Ltd.), passing through the voids inside the negative electrode material layer, all the minimum values of the curved paths reaching the electrodeposited copper foil surface side from the voids on the surface of the negative electrode material layer in the thickness direction were obtained, and the arithmetic average value was taken as the curved path length L ($\mu$m). Then, the curved path ratio was obtained by dividing the curved path length L by the thickness T ($\mu$m) of the negative electrode material layer. In addition, when there are a plurality of curved paths extending from one void on the electrodeposited copper foil surface to the surface side of the negative electrode material layer in the thickness direction, a value that minimizes the number of curved paths among them was selected.
The curved path ratio of Example 6 was 1.585, and the curved path ratio of Comparative Example 1 was 1.712. In Example 6, the value of the curved paths was smaller than that in Comparative Example 1, and it is presumed that, for this reason, the resistance to Li deposition was excellent as shown in Table 3.

[Table 2]

| | | 0 times tap density (g/cm$^3$) | 30 times tap density (g/cm$^3$) | 250 times tap density (g/cm$^3$) | R value | Springback rate |
|---|---|---|---|---|---|---|
| Examples | 1 | 0.53 | 0.66 | 1.02 | 0.27 | 31% |
| | 2 | 0.44 | 0.53 | 0.86 | 0.15 | 18% |
| | 3 | 0.39 | 0.5 | 0.78 | 0.23 | 17% |
| | 4 | 0.43 | 0.54 | 0.87 | 0.14 | 17% |
| | 5 | 0.39 | 0.48 | 0.8 | 0.13 | 20% |
| | 6 | 0.36 | 0.44 | 0.76 | 0.35 | 21% |
| | 7 | 0.53 | 0.53 | 0.98 | 0.31 | 17% |
| | 8 | 0.42 | 0.52 | 0.79 | 0.22 | 24% |
| | 9 | 0.54 | 0.69 | 0.98 | 0.25 | 20% |
| | 10 | 0.55 | 0.70 | 1.06 | 0.26 | 19% |
| Comparative Examples | 1 | 0.45 | 0.64 | 1.07 | 0.09 | 14% |
| | 2 | 0.46 | 0.56 | 1.18 | 0.06 | 28% |
| | 3 | 0.69 | 1.01 | 1.04 | 0.09 | 31% |
| | 4 | 0.75 | 0.87 | 1.27 | 0.19 | 24% |
| | 5 | 0.56 | 0.73 | 1.05 | 0.13 | 16% |
| | 6 | 0.62 | 0.76 | 1.19 | 0.18 | 13% |

[Table 3]

| | | D50 (μm) | | Specific surface area (m²/g) | | Degree of graphitization (%) | | Compressive load (kN/cm²) | | Electrode orientation | | Discharge capacity (Ah/kg) | | Li deposition resistance (%) | | Evaluation value of input characteristics | |
|---|---|---|---|---|---|---|---|---|---|---|---|---|---|---|---|---|---|
| | | Value | Evaluation | Value | Evaluation | Value | Evaluation | Value | Evaluation | Value | Evaluation | Value | Evaluation | Value | Evaluation | Value | Evaluation |
| Examples | 1 | 10.0 | A | 2.8 | A | 92.4 | A | 2.49 | B | 279 | A | 344 | B | 21 | C | 23 | C |
| | 2 | 10.6 | A | 3.5 | A | 93.7 | A | 2.30 | B | 284 | A | 350 | A | 26 | B | 20 | C |
| | 3 | 14.2 | B | 3.4 | A | 92.2 | A | 2.75 | B | 304 | B | 345 | B | 28 | B | 23 | C |
| | 4 | 7.9 | A | 3.6 | A | 93.8 | A | 2.92 | A | 297 | A | 341 | B | 28 | B | 29 | B |
| | 5 | 8.4 | A | 3.6 | A | 90.9 | B | 2.75 | B | 305 | B | 343 | B | 30 | A | 27 | B |
| | 6 | 9.8 | A | 3.9 | A | 93.8 | A | 3.14 | A | 334 | B | 341 | B | 34 | A | 30 | A |
| | 7 | 11.9 | B | 1.7 | B | 93.7 | A | 3.84 | A | 279 | A | 346 | B | 27 | B | 37 | A |
| | 8 | 10.5 | A | 2.3 | A | 90.8 | B | 4.58 | A | 297 | A | 341 | B | 32 | A | 46 | A |
| | 9 | 12.7 | B | 2.2 | A | 93.0 | A | 2.90 | A | 289 | A | 347 | B | 30 | A | 26 | B |
| | 10 | 11.5 | B | 1.9 | B | 93.7 | A | 2.83 | A | 295 | A | 349 | B | 29 | B | 26 | B |
| Comparative Examples | 1 | 21.1 | C | 4.0 | A | 97.2 | A | 1.18 | D | 444 | C | 363 | A | 7 | D | 1 | D |
| | 2 | 5.2 | A | 6.7 | C | 96.6 | A | 1.19 | D | 1229 | D | 358 | A | 11 | D | 11 | D |
| | 3 | 19.5 | D | 1.1 | B | 94.4 | A | 2.27 | C | 325 | B | 357 | A | 13 | D | 14 | D |
| | 4 | 12.0 | B | 1.5 | B | 92.4 | A | 1.71 | D | 1888 | D | 340 | C | 10 | D | 13 | D |
| | 5 | 15.5 | C | 1.1 | B | 86.0 | C | 2.50 | B | 507 | C | 327 | D | 20 | D | 19 | D |
| | 6 | 12.4 | B | 1.7 | B | 79.3 | C | 2.45 | B | 2168 | D | 308 | D | 24 | C | 21 | C |

EP 4 290 618 A1

Evaluation criteria for each physical property in Table 3 are as follows. (D50)

A: D50 of the negative electrode material is 11.0 $\mu$m or less.
B: D50 of the negative electrode material is more than 11.0 $\mu$m and 14.5 $\mu$m or less.
C: D50 of the negative electrode material is more than 14.5 $\mu$m and 17.0 $\mu$m or less.
D: D50 of the negative electrode material is more than 17.0 $\mu$m.

(Specific Surface Area)

A: The specific surface area of the negative electrode material is from 2.0 $m^2$/g to 6.0 $m^2$/g.
B: The specific surface area of the negative electrode material is less than 2.0 $m^2$/g.
C: The specific surface area of the negative electrode material is more than 6.0 m2/g.

(Degree of Graphitization)

A: The degree of graphitization of the negative electrode material is 92.0% or more.
B: The degree of graphitization of the negative electrode material is 90.0% or more and less than 92.0%.
C: The degree of graphitization of the negative electrode material is less than 90.0%.

(Compressive Load)

A: The compressive load of the negative electrode material is 2.80 kN/$cm^2$ or more.
B: The compressive load of the negative electrode material is 2.30 kN/$cm^2$ or more and less than 2.80 kN/$cm^2$.
C: The compressive load of the negative electrode material is 1.90 kN/$cm^2$ or more and less than 2.30 kN/$cm^2$.
D: The compressive load of the negative electrode material is less than 1.90 kN/$cm^2$.

(Electrode orientation)

A: The value of the electrode orientation is 300 or less.
B: The value of the electrode orientation is more than 300 and 400 or less.
C: The value of the electrode orientation is more than 400 and 999 or less.
D: The value of the electrode orientation is more than 999.

Evaluation criteria for each value representing the performance of the lithium-ion secondary battery in Table 3 are as follows.

(Discharge Capacity)

A: The discharge capacity of the lithium-ion secondary battery is 350 Ah/kg or more.
B: The discharge capacity of the lithium-ion secondary battery is more than 340 Ah/kg and less than 350 Ah/kg.
C: The discharge capacity of the lithium-ion secondary battery is more than 330 Ah/kg and 340 Ah/kg or less.
D: The discharge capacity of the lithium-ion secondary battery is 330 Ah/kg or less.

(Li Deposition Resistance)

A: Li deposition resistance of the lithium-ion secondary battery is 30% or more.
B: The Li deposition resistance of the lithium-ion secondary battery is 25% or more and less than 30%.
C: The Li deposition resistance of the lithium-ion secondary battery is 20% or more and less than 25%.
D: The Li deposition resistance of the lithium ion secondary battery is less than 20%.

(Evaluation Value of Input Characteristics)

A: The evaluation value of the input characteristics is 30 or more.
B: The evaluation value of the input characteristics is 25 or more and less than 30.
C: The evaluation value of the input characteristics is 20 or more and less than 25.
D: The evaluation value of the input characteristics is less than 20.

In Table 3, it was confirmed that the evaluation value of the input characteristics and the degree of graphitization were high, and thus the discharge capacity and Li deposition resistance of the lithium ion secondary batteries tended to be excellent.

The disclosure of PCT/JP2021/003761 filed on February 2, 2021 is incorporated herein by reference in its entirety.

All documents, patent applications, and technical standards described in the present disclosure are herein incorporated by reference to the same extent as if each individual document, patent application, or technical standard was specifically and individually indicated to be incorporated by reference.

## Claims

1. A negative electrode material for a lithium-ion secondary battery comprising graphite particles satisfying x >2.0 when a compressive load required to consolidate to 1.7 $g/cm^3$ in autograph measurement is x ($kN/cm^2$), $5.0 \leq y \leq 20.0$ when, a particle size at which a cumulative volume from a small diameter side of a volume-based particle size distribution measured by a laser diffraction method reaches 50% is y, wherein the above mentioned x and y satisfy the following Formula (1), and a degree of graphitization satisfies 90.0% or more:

$$11.3x - 0.66y + 1.4 \geq 14.5 \cdots (1).$$

2. A negative electrode material for a lithium-ion secondary battery comprising graphite particles satisfying, when the negative electrode material for a lithium-ion secondary battery is used to form a negative electrode material layer, a ratio L/T between a curved path length L ($\mu$m), which is a distance from one face to the other face in a thickness direction through a void inside the negative electrode material layer and a thickness T ($\mu$m) of the negative electrode material layer, of 1.7 or less.

3. The negative electrode material for a lithium-ion secondary battery according to claim 1 or 2, wherein a ratio $I_{002}/I_{110}$ between a peak intensity ($I_{002}$) of a 002 diffraction line and a peak intensity ($I_{110}$) of a 110 diffraction line, which are obtained when the negative electrode material for a lithium-ion secondary battery is used to form a negative electrode and the negative electrode pressed under 0.8 t/cm is subject to an X-ray diffraction measurement, is 350 or less.

4. The negative electrode material for a lithium-ion secondary battery according to any one of claims 1 to 3, wherein a face of the graphite particles is not coated with a low crystalline carbon.

5. The negative electrode material for a lithium-ion secondary battery according to any one of claims 1 to 4, wherein when a ratio $I_D/I_G$ between a peak intensity ($I_D$) in a range of 1300 $cm^{-1}$ to 1400 $cm^{-1}$ and a peak intensity ($I_G$) in a range of 1580 $cm^{-1}$ to 1620 $cm^{-1}$ is a R value, the R value of the graphite particles is from 0.10 to 0.40.

6. The negative electrode material for a lithium-ion secondary battery according to any one of claims 1 to 5, wherein a face of the graphite particles is coated with a low crystalline carbon, wherein when a ratio $I_D/I_G$ between a peak intensity ($I_D$) in a range of 1300 $cm^{-1}$ to 1400 $cm^{-1}$ and a peak intensity ($I_G$) in a range of 1580 $cm^{-1}$ to 1620 $cm^{-1}$ is a R value, the R value of the graphite particles is from 0.20 to 0.60.

7. The negative electrode material for a lithium-ion secondary battery according to any one of claims 1 to 6, wherein a particle size of the graphite particles at which the cumulative volume from the small diameter side of the volume-based particle size distribution measured by a laser diffraction method reaches 10% is from 0.1 $\mu$m to 7.0 $\mu$m.

8. The negative electrode material for a lithium-ion secondary battery according to any one of claims 1 to 7, wherein a 0 times tap density of the graphite particles is from 0.3 g/cm$^3$ to 0.6 g/cm$^3$.

9. The negative electrode material for a lithium-ion secondary battery according to any one of claims 1 to 8, wherein a 30 times tap density of the graphite particles is from 0.4 g/cm$^3$ to 0.7 g/cm$^3$.

10. The negative electrode material for a lithium-ion secondary battery according to any one of claims 1 to 9, wherein a 250 times tap density of the graphite particles is from 0.7 g/cm$^3$ to 1.1 g/cm$^3$.

11. The negative electrode material for a lithium-ion secondary battery according to any one of claims 1 to 10, wherein a specific surface area of the graphite particles measured by a nitrogen adsorption measurement at 77K is from 0.2 m$^2$/g to 6.0 m$^2$/g.

12. The negative electrode material for a lithium-ion secondary battery according to any one of claims 1 to 11, wherein a particle size distribution D90/D10 of the graphite particles is from 3.0 to 7.0.

13. The negative electrode material for a lithium-ion secondary battery according to any one of claims 1 to 12, wherein the graphite particles comprises composite particles in which a plurality of graphite particles are gathered or bound together.

14. A negative electrode material composition for a lithium-ion secondary battery, comprising: the negative electrode material for a lithium-ion secondary battery according to any one of claims 1 to 13, a binder, and a solvent.

15. A negative electrode for a lithium-ion secondary battery, comprising: a negative electrode material layer comprising the negative electrode material for a lithium-ion secondary battery according to any one of claims 1 to 13, and a current collector.

16. A lithium-ion secondary battery, comprising: the negative electrode for a lithium-ion secondary battery according to claim 15, a positive electrode; and an electrolytic solution.

## FIG. 1

## INTERNATIONAL SEARCH REPORT

| International application No. |
|---|
| **PCT/JP2022/002824** |

**A. CLASSIFICATION OF SUBJECT MATTER**

*H01M 4/587*(2010.01)i
FI: H01M4/587

According to International Patent Classification (IPC) or to both national classification and IPC

**B. FIELDS SEARCHED**

Minimum documentation searched (classification system followed by classification symbols)

H01M4/587

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2019/186828 A1 (HITACHI CHEMICAL CO LTD) 03 October 2019 (2019-10-03) paragraphs [0025]-[0026], [0040]-[0041], [0116]-[0186], table 1 | 1, 3-16 |
| Y | JP 2019-510714 A (SGL CARBON SE) 18 April 2019 (2019-04-18) paragraphs [0020], [0030] | 1, 3-16 |
| X | JP 2015-041434 A (SUMIKA CHEM ANALYSIS SERVICES) 02 March 2015 (2015-03-02) paragraphs [0004], [0062], [0084], [0095]-[0108] | 2-5, 13-16 |
| Y | | 6-12 |
| Y | JP 2019-164967 A (TDK CORP) 26 September 2019 (2019-09-26) claims 1, 5 | 12 |
| Y | JP 2017-050184 A (MITSUBISHI CHEM CORP) 09 March 2017 (2017-03-09) claims 1, 5 | 12 |
| Y | JP 2007-324067 A (NIPPON CARBON CO LTD) 13 December 2007 (2007-12-13) claim 3 | 12 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 February 2022** | **15 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2022/002824**

### C.    DOCUMENTS CONSIDERED TO BE RELEVANT

| Category* | Citation of document, with indication, where appropriate, of the relevant passages | Relevant to claim No. |
|---|---|---|
| A | WO 2020/195055 A1 (PANASONIC IP MAN CO LTD) 01 October 2020 (2020-10-01) paragraph [0045] | 2 |

Form PCT/ISA/210 (second sheet) (January 2015)

**INTERNATIONAL SEARCH REPORT**
Information on patent family members

International application No.

**PCT/JP2022/002824**

| Patent document cited in search report | | | Publication date (day/month/year) | Patent family member(s) | | | Publication date (day/month/year) |
|---|---|---|---|---|---|---|---|
| WO | 2019/186828 | A1 | 03 October 2019 | EP 3780184 A1 paragraphs [0036]-[0038], [0058]-[0059], [0159]-[0241], table 1 | | | |
| JP | 2019-510714 | A | 18 April 2019 | US 2019/0031514 A1 paragraphs [0027], [0041] WO 2017/129774 A1 EP 3408225 A1 CN 108698832 A KR 10-2018-0108707 A | | | |
| JP | 2015-041434 | A | 02 March 2015 | (Family: none) | | | |
| JP | 2019-164967 | A | 26 September 2019 | (Family: none) | | | |
| JP | 2017-050184 | A | 09 March 2017 | US 2018/0013146 A1 paragraphs [0343]-[0344] US 2020/0185721 A1 WO 2016/113952 A1 EP 3246974 A1 CN 107112536 A KR 10-2017-0103003 A | | | |
| JP | 2007-324067 | A | 13 December 2007 | US 2010/0297500 A1 claim 3 WO 2007/141905 A1 EP 2037515 A1 KR 10-2009-0016462 A CN 101485017 A KR 10-1310300 B | | | |
| WO | 2020/195055 | A1 | 01 October 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015147012 A
- JP 2005302725 A
- JP 2021003761 W